(19) Europäisches Patentamt
European Patent Office
Office européen des brevets

(11) **EP 4 321 406 A1**

(12) # EUROPEAN PATENT APPLICATION
published in accordance with Art. 153(4) EPC

(43) Date of publication:
**14.02.2024 Bulletin 2024/07**

(21) Application number: **22794307.3**

(22) Date of filing: **23.02.2022**

(51) International Patent Classification (IPC):
***B60W 60/00*** (2020.01)

(52) Cooperative Patent Classification (CPC):
**B60W 30/08; B60W 60/00**

(86) International application number:
**PCT/CN2022/077480**

(87) International publication number:
**WO 2022/227827 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.04.2021 CN 202110454337**

(71) Applicant: **Huawei Technologies Co., Ltd.
Shenzhen, Guangdong 518129 (CN)**

(72) Inventors:
• **CHENG, Siyuan
Shenzhen, Guangdong 518129 (CN)**
• **HAO, Donghao
Shenzhen, Guangdong 518129 (CN)**
• **YANG, Shaoyu
Shenzhen, Guangdong 518129 (CN)**
• **WANG, Xinyu
Shenzhen, Guangdong 518129 (CN)**

(74) Representative: **Maiwald GmbH
Engineering
Elisenhof
Elisenstrasse 3
80335 München (DE)**

(54) **DECISION-MAKING METHOD AND APPARATUS AND VEHICLE**

(57) This application discloses a decision making method. The method includes: obtaining predicted moving tracks of an ego vehicle and each obstacle around the ego vehicle; determining that a game object is an obstacle that is in the obstacles around the ego vehicle and whose predicted moving track intersects a predicted moving track of the ego vehicle or whose distance from the ego vehicle is less than a specified threshold; constructing one sampling game space for each game object based on vehicle information of the ego vehicle, obstacle information of the game object, and road condition information that are collected by a sensor system, where each sampling game space includes at least one game policy; calculating a policy cost of each game policy, where the policy cost is a numerical value obtained by performing weighting on each factor weight of the policy cost; and determining a decision making result of the ego vehicle, where the decision making result is a game policy with a smallest policy cost in a common sampling game space, the common sampling game space includes at least one game policy, and each sampling game space includes the game policy in the common sampling game space. A decision making apparatus, a vehicle, an intelligent driving system, a computer-readable storage medium, a computing device, and a computer program product are also disclosed.

FIG. 15

EP 4 321 406 A1

**Description**

This application claims priority to Chinese Patent Application No. 202110454337.X, filed with the China National Intellectual Property Administration on April 26, 2021 and entitled "DECISION MAKING METHOD AND APPARATUS, AND VEHICLE", which is incorporated herein by reference in its entirety.

**TECHNICAL FIELD**

The present invention relates to the field of intelligent driving technologies, and in particular, to a decision making method and apparatus, and a vehicle.

**BACKGROUND**

With the development and popularization of intelligent technology, intelligent driving of vehicles becomes a comparatively popular research direction at present. Based on function requirements, an intelligent driving system may be divided into four key functional modules: positioning, environment perception, path planning, and decision control. In the decision control module, vendors propose decision planning methods applied to different scenarios. The methods are mainly classified into high-level semantic decision making (such as lane change decision making and lane keeping decision making) and obstacle decision making for an object (such as avoidance decision making, vehicle following decision making, overtaking decision making, and yielding decision making).

In a process of obstacle decision making for an object, a conventional decision making manner of planning a driving route for a vehicle by detecting an obstacle type can deal with only specific scenarios. In such manners, usually, a specific scenario to be dealt with is quantitatively described, and then, key information of a key obstacle is extracted for decision making. Therefore, a traffic scenario generalization capability is poor, and an obstacle environment cannot be dealt with in another scenario.

**SUMMARY**

To resolve the foregoing problem, embodiments of this application provide a decision making method and apparatus, and a vehicle.

According to a first aspect, this application provides a decision making method, including: obtaining predicted moving tracks of an ego vehicle and each obstacle around the ego vehicle; determining a game object, where the game object is an obstacle that is in the obstacles around the ego vehicle and whose predicted moving track intersects a predicted moving track of the ego vehicle or whose distance from the ego vehicle is less than a specified threshold; constructing one sampling game space for each game object based on vehicle information of the ego vehicle, obstacle information of the game object, and road condition information that are collected by a sensor system, where each sampling game space includes at least one game policy; calculating a policy cost of each game policy, where the policy cost is a numerical value obtained by performing weighting on each factor weight of the policy cost; and determining a decision making result of the ego vehicle, where the decision making result is a game policy with a smallest policy cost in a common sampling game space, the common sampling game space includes at least one game policy, and each sampling game space includes the game policy in the common sampling game space.

In this implementation, the predicted moving tracks of the ego vehicle and each obstacle around the ego vehicle are obtained, and the game object is determined by determining whether the predicted moving tracks intersect each other or whether a distance between two vehicles is less than the specified threshold; then, a sampling game space between the ego vehicle and each obstacle is constructed, and a policy cost of each game policy in each sampling game space is calculated; and same game policies in all sampling game spaces are obtained, and the game policy with the smallest policy cost in the same game policies is selected as a game result. This solution does not depend on a scenario, and therefore is applicable to all scenarios. In addition, in a game process, when faced with a plurality of game objects, by obtaining the same game policies in all the sampling game spaces, the ego vehicle can game with the plurality of game objects at the same time.

In an implementation, the determining a decision making result of the ego vehicle includes: constructing a feasible region of each sampling game space, where the feasible region of each sampling game space is at least one game policy corresponding to a policy cost that meets a specified requirement; and determining a game policy with a smallest policy cost in same game policies from an intersection of feasible regions of all the sampling game spaces.

In this implementation, different from a conventional technology in which an optimal game policy result is directly obtained, in this application, each game policy that meets a requirement is output, and a feasible region between the ego vehicle and each obstacle is constructed, so that decision making for a conflict between a plurality of game objects is implemented based on the feasible region in this application. In this way, an output game result is more proper.

In an implementation, the method further includes: determining a non-game object, where the non-game object is an obstacle that is in the obstacles around the ego vehicle and whose predicted moving track does not intersect the predicted moving track of the ego vehicle or whose distance from the ego vehicle is not less than the specified threshold; constructing a feasible region of the ego vehicle based on the vehicle information of the ego vehicle, obstacle information of the non-game object, and the road condition information that are collected by the sensor system, where the feasible region of the ego vehicle is at least one policy of using different decisions by the ego vehicle without colliding with the non-game object; and if it is detected that the decision making result of the ego vehicle is within the feasible region of the ego vehicle, outputting the decision making result of the ego vehicle.

In this implementation, the feasible region between the ego vehicle and the non-game object is constructed, an intersection of a feasible region between the ego vehicle and each game object and the feasible region between the ego vehicle and the non-game object is calculated, and a game policy with a smallest game cost is selected from the intersection as the decision making result. This ensures that the selected decision making result is applicable to a scenario that includes a game object and a non-game object.

In an implementation, the constructing one sampling game space for each game object based on vehicle information of the ego vehicle, obstacle information of the game object, and road condition information that are collected by a sensor system includes: determining upper decision limits and lower decision limits of the ego vehicle and each obstacle in the game object based on the vehicle information of the ego vehicle, the obstacle information of the game object, and the road condition information; obtaining decision making policies of the ego vehicle and each obstacle in the game object from the upper decision limits and lower decision limits of the ego vehicle and each obstacle in the game object according to a specified rule; and combining a decision making policy of the ego vehicle and a decision making policy of each obstacle in the game object, to obtain at least one game policy between the ego vehicle and each obstacle in the game object.

In this implementation, game policy selection ranges and selection manners of the ego vehicle and each game object are determined, to obtain game policies of the ego vehicle and each game object; and then, a game policy of the ego vehicle and a game policy of each game object are combined, to obtain a game policy set between the ego vehicle and each game object. This ensures properness of the game policy in each sampling game space.

In an implementation, the method further includes: determining a behavior label of each game policy based on a distance between the ego vehicle and a conflict point, a distance between the game object and the conflict point, and the at least one game policy between the ego vehicle and each obstacle in the game object, where the conflict point is a location at which predicted moving tracks of the ego vehicle and the obstacle intersect each other or a location at which a distance between the ego vehicle and the obstacle is less than the specified threshold, and the behavior label includes at least one of yielding by the ego vehicle, overtaking by the ego vehicle, and yielding by both the ego vehicle and the obstacle.

In this implementation, each game policy is labeled, so that after a game result is subsequently selected, a label of the game policy can be directly sent to a next-layer execution unit, with no need to analyze, based on a game manner used by two parties in the game policy, whether the ego vehicle should use yielding by the ego vehicle, overtaking by the ego vehicle, or yielding by both the ego vehicle and an obstacle in a current game process. This greatly reduces a decision making time, and improves user experience.

In an implementation, the calculating a policy cost of each game policy includes: determining all factors of the policy cost, where all the factors of the policy cost include at least one of safety, comfort, passing efficiency, right of way, a prior probability of an obstacle, and historical decision correlation; calculating a factor cost of each factor in each policy cost; and weighting the factor cost of each factor in each policy cost, to obtain the policy cost of each game policy.

In this implementation, during calculation of the policy cost of each game policy, the cost of each factor may be calculated, and then weighting calculation is performed on the cost of each factor, to obtain the cost of each game policy, thereby determining a degree of properness of each game policy.

In an implementation, after the calculating a policy cost of each game policy, the method further includes: performing comparison to determine whether each factor in the policy cost is within a specified range; and deleting a game policy corresponding to a policy cost including any factor that is not within the specified range.

In this implementation, an improper game policy is deleted, so as to avoid the following case: Subsequently, a selected policy result is an improper game policy, and therefore the decision making result cannot be executed or is incorrect, which reduces reliability of the decision making method.

In an implementation, the method further includes: if it is detected that the decision making result of the ego vehicle is not within the feasible region of the ego vehicle, outputting a decision making result of yielding by the ego vehicle.

In this implementation, if the to-be-output decision making result is not within the feasible region of the ego vehicle, it indicates that none of results of this decision making meets a condition, and the ego vehicle outputs no decision making result. This is equivalent to a case in which the ego vehicle performs no game process, and a serious defect exists. Therefore, when a decision making result cannot be determined, "yielding by the ego vehicle" is selected as the decision making result according to a "safety" principle, so as to ensure that the decision making result selected by the ego vehicle can make the ego vehicle safe in a driving process.

According to a second aspect, this application provides a decision making apparatus, including: a transceiver unit, configured to obtain predicted moving tracks of an ego vehicle and each obstacle around the ego vehicle; and a processing unit, configured to: determine a game object, where the game object is an obstacle that is in the obstacles around the ego vehicle and whose predicted moving track intersects a predicted moving track of the ego vehicle or whose distance from the ego vehicle is less than a specified threshold; construct one sampling game space for each game object based on vehicle information of the ego vehicle, obstacle information of the game object, and road condition information that are collected by a sensor system, where each sampling game space includes at least one game policy; calculate a policy cost of each game policy, where the policy cost is a numerical value obtained by performing weighting on each factor weight of the policy cost; and determine a decision making result of the ego vehicle, where the decision making result is a game policy with a smallest policy cost in a common sampling game space, the common sampling game space includes at least one game policy, and each sampling game space includes the game policy in the common sampling game space.

In an implementation, the processing unit is specifically configured to: construct a feasible region of each sampling game space, where the feasible region of each sampling game space is at least one game policy corresponding to a policy cost that meets a specified requirement; and determine a game policy with a smallest policy cost in same game policies from an intersection of feasible regions of all sampling game spaces.

In an implementation, the processing unit is further configured to: determine a non-game object, where the non-game object is an obstacle that is in the obstacles around the ego vehicle and whose predicted moving track does not intersect the predicted moving track of the ego vehicle or whose distance from the ego vehicle is not less than the specified threshold; construct a feasible region of the ego vehicle based on the vehicle information of the ego vehicle, obstacle information of the non-game object, and the road condition information that are collected by the sensor system, where the feasible region of the ego vehicle is at least one policy of using different decisions by the ego vehicle without colliding with the non-game object; and if it is detected that the decision making result of the ego vehicle is within the feasible region of the ego vehicle, output the decision making result of the ego vehicle.

In an implementation, the processing unit is specifically configured to: determine upper decision limits and lower decision limits of the ego vehicle and each obstacle in the game object based on the vehicle information of the ego vehicle, the obstacle information of the game object, and the road condition information; obtain decision making policies of the ego vehicle and each obstacle in the game object from the upper decision limits and lower decision limits of the ego vehicle and each obstacle in the game object according to a specified rule; and combine a decision making policy of the ego vehicle and a decision making policy of each obstacle in the game object, to obtain at least one game policy between the ego vehicle and each obstacle in the game object.

In an implementation, the processing unit is further configured to determine a behavior label of each game policy based on a distance between the ego vehicle and a conflict point, a distance between the game object and the conflict point, and the at least one game policy between the ego vehicle and each obstacle in the game object, where the conflict point is a location at which predicted moving tracks of the ego vehicle and the obstacle intersect each other or a location at which a distance between the ego vehicle and the obstacle is less than the specified threshold, and the behavior label includes at least one of yielding by the ego vehicle, overtaking by the ego vehicle, and yielding by both the ego vehicle and the obstacle.

In an implementation, the processing unit is specifically configured to: determine all factors of the policy cost, where all the factors of the policy cost include at least one of safety, comfort, passing efficiency, right of way, a prior probability of an obstacle, and historical decision correlation; calculate a factor cost of each factor in each policy cost; and weight the factor cost of each factor in each policy cost, to obtain the policy cost of each game policy.

In an implementation, the processing unit is further configured to: perform comparison to determine whether each factor in the policy cost is within a specified range; and delete a game policy corresponding to a policy cost including any factor that is not within the specified range.

In an implementation, the processing unit is further configured to: if it is detected that the decision making result of the ego vehicle is not within the feasible region of the ego vehicle, output a decision making result of yielding by the ego vehicle.

According to a third aspect, this application provides an intelligent driving system, including at least one processor. The processor is configured to execute instructions stored in a memory, so as to perform the embodiment according to any one of the first aspect or the possible implementations of the first aspect.

According to a fourth aspect, this application provides a vehicle, including at least one processor. The processor is configured to perform the embodiment according to any one of the first aspect or the possible implementations of the first aspect.

According to a fifth aspect, this application provides an intelligent driving system, including a sensor system and a processor. The processor is configured to perform the embodiment according to any one of the first aspect or the possible implementations of the first aspect.

According to a sixth aspect, this application provides a computer-readable storage medium. The computer-readable storage medium stores a computer program. When the computer program is executed on a computer, the computer is enabled to perform the embodiment according to any one of the first aspect or the possible implementations of the first aspect.

According to a seventh aspect, this application provides a computing device, including a memory and a processor. The memory stores executable code, and the processor executes the executable code to implement the embodiment according to any one of the first aspect or the possible implementations of the first aspect.

According to an eighth aspect, this application provides a computer program product. The computer program product stores instructions. When the instructions are executed by a computer, the computer is enabled to implement the embodiment according to any one of the first aspect or the possible implementations of the first aspect.

## BRIEF DESCRIPTION OF DRAWINGS

The following briefly describes accompanying drawings that need to be used in descriptions of embodiments or a conventional technology.

FIG. 1 is a schematic diagram of an architecture of an intelligent driving system according to an embodiment of this application;

FIG. 2 is a schematic diagram of an architecture of a decision making module according to an embodiment of this application;

FIG. 3 is a schematic diagram of four common scenarios between an ego vehicle and an obstacle according to an embodiment of this application;

FIG. 4 is a schematic diagram of a scenario between an ego vehicle and a non-game object according to an embodiment of this application;

FIG. 5 is a schematic diagram of a scenario of a track conflict between an ego vehicle and a game object according to Embodiment 1 of this application;

FIG. 6 is a schematic diagram of a function relationship between a time-domain safety cost and an absolute value of a TDTC according to Embodiment 1 of this application;

FIG. 7 is a schematic diagram of a function relationship between a space-domain safety cost and a minimum distance between two vehicles according to Embodiment 1 of this application;

FIG. 8 is a schematic diagram of a function relationship between a comfort cost and an acceleration variation according to Embodiment 1 of this application;

FIG. 9 is a schematic diagram of a function relationship between an efficiency cost and a time for passing through a collision point according to Embodiment 1 of this application;

FIG. 10 is a schematic diagram of a function relationship between a prior probability cost of overtaking by a game object and a probability that the game object allows an ego vehicle to pass according to Embodiment 1 of this application;

FIG. 11 is a schematic diagram of a function relationship between a right-of-way ratio and a distance from a social vehicle to a conflict point according to Embodiment 1 of this application;

FIG. 12 is a schematic diagram of a function relationship between a historical decision making result correlation cost and an overtaking cost or a yielding cost corresponding to each frame of image according to Embodiment 1 of this application;

FIG. 13 is a diagram of an occupation relationship between a longitudinal distance and a time for longitudinal planning by a motion planning module according to Embodiment 1 of this application;

FIG. 14 is a schematic diagram of multi-vehicle conflict resolution according to Embodiment 2 of this application;

FIG. 15 is a schematic flowchart of a decision making method according to an embodiment of this application; and

FIG. 16 is a structural block diagram of a decision making apparatus method according to an embodiment of this application.

## DESCRIPTION OF EMBODIMENTS

The following describes technical solutions in embodiments of this application with reference to accompanying drawings in embodiments of this application.

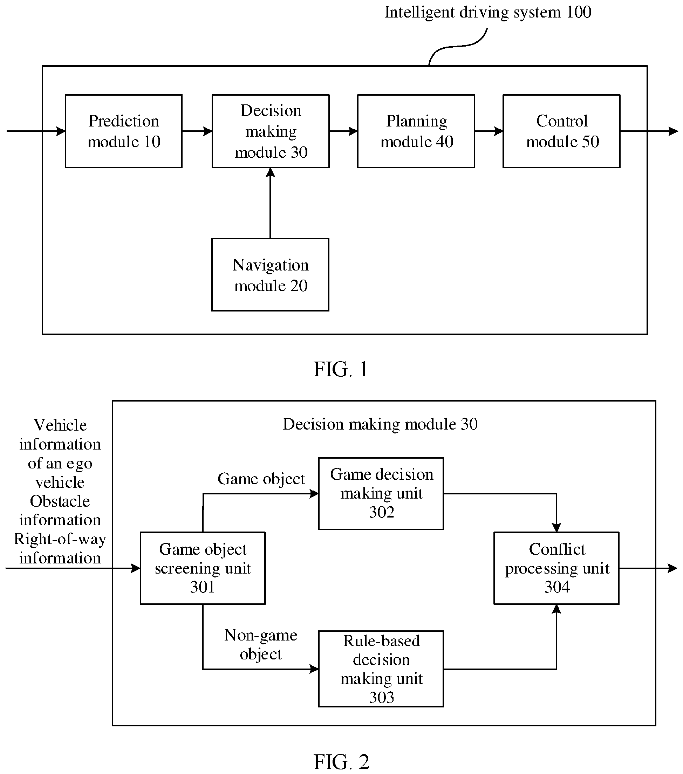

An intelligent driving system uses a sensor to detect a surrounding environment and a status of the system, such as navigation positioning information, road information, information about obstacles such as another vehicle and a pedestrian, position and posture information of the system, and motion status information, and precisely controls a driving speed and steering of a vehicle through a specific decision planning algorithm, thereby implementing self driving. As shown in FIG. 1, based on a function requirement of an intelligent driving system 100, the system 100 may be divided into a prediction module 10, a navigation module 20, a decision making module 30, a planning module 40, and a control module 50.

The prediction module 10 is configured to obtain information such as a vehicle location, an environment around a vehicle, and a vehicle status by using data collected by a sensor such as a global positioning system (global positioning system, GPS) unit, an inertial navigation system (inertial navigation system, INS) unit, an odometer, a camera, or a radar in a sensor system, and predict paths along which an ego vehicle and each obstacle around the ego vehicle are to travel in a future time period.

The navigation module 20 may be an in-vehicle navigation system, a navigation application (application, APP) on an external terminal, or the like, and is configured to provide a navigation route of the ego vehicle and road condition information such as lane markings, traffic lights, and a fork in the route.

The decision making module 30 is configured to: receive paths that are predicted by the prediction module 10 and along which the ego vehicle and another vehicle around the ego vehicle are to travel in a future time period, and the navigation route of the ego vehicle and the road condition information such as the lane markings, traffic lights, and fork in the route that are provided by the navigation module 20; and determine whether the ego vehicle conflicts with the obstacle when traveling along a predicted route (or the navigation route). If the ego vehicle does not conflict with the obstacle, the ego vehicle does not game with the obstacle, and a moving manner and running track are determined according to a specified rule. If the ego vehicle conflicts with the obstacle, a game result between the ego vehicle and each obstacle is calculated based on input data, and each obstacle is tagged with a behavior label such as yielding/overtaking or avoiding/following.

The planning module 40 is configured to receive a decision making result that is output by the decision making module 30, and determine, based on the behavior label of each obstacle, to perform an action such as yielding/overtaking or avoiding/following on the obstacle, for example, the ego vehicle selects a lane or chooses whether to change a lane, whether to follow a vehicle, whether to detour, or whether to park.

The control module 50 is configured to control, based on a planning result delivered by the planning module 40, the ego vehicle to reach an expected speed and steering angle.

In this application, the following specifically describes the technical solutions in this application by using the decision making module 30 as an example. Object decision making means that, in an autonomous navigation process, a self-driving vehicle needs to make a decision on an obstacle in an environment, and attach a behavior label to the obstacle. For example, if the self-driving vehicle determines to perform an action such as detouring, following, or overtaking on an obstacle, the self-driving vehicle attaches a label such as detouring, following, or overtaking to the obstacle.

FIG. 2 is a schematic diagram of an architecture of a decision making module according to an embodiment of this application. As shown in FIG. 2, the decision making module 30 includes a game object screening unit 301, a game decision making unit 302, a rule-based decision making unit 303, and a conflict processing unit 304.

The game object screening unit 301 determines, based on vehicle information of an ego vehicle, obstacle information of an obstacle, and road condition information that are input by another upper-layer module such as a sensor system, a positioning module, or an environment perception module, whether the ego vehicle conflicts with the obstacle when traveling along a reference path, so as to classify obstacles into a game object and a non-game object. The game object is an obstacle that may conflict with the ego vehicle, and the non-game object is an obstacle for which it is impossible to conflict with the ego vehicle.

In this application, the vehicle information of the ego vehicle includes a navigation route provided by a navigation module 20 of the ego vehicle or a navigation device on an external terminal, and data such as a speed, an acceleration, a heading angle, and a location of the ego vehicle that are detected by each sensor in the vehicle. The obstacle information includes a location of each obstacle, a distance between obstacles, a distance between each obstacle and the ego vehicle, a type of each obstacle, a status of each obstacle, historical tracks of the ego vehicle and each obstacle, data such as a predicted traveling track and motion status in a future time period, and data such as a speed, an acceleration, and a heading angle of each obstacle. The road condition information includes traffic light information, road sign indication information, and the like.

For example, after obtaining the vehicle information of the ego vehicle, the obstacle information, and the road condition information, the game object screening unit 301 determines, based on whether traveling tracks of the ego vehicle and each obstacle intersect each other, or based on data such as traveling tracks, speeds, and accelerations of the ego vehicle and each obstacle, whether there is an obstacle whose location is the same as the location of the ego vehicle (or a distance between locations of an obstacle and the ego vehicle is less than a specified threshold). When there is an obstacle whose moving track intersects a moving track of the ego vehicle or whose location is the same as the location of the ego vehicle, such an obstacle is classified as the game object, and obstacle information of the game object is sent to the game decision making unit 302. An obstacle other than the game object is classified as the non-game object, and obstacle information of the non-game object is sent to the rule-based decision making unit 303.

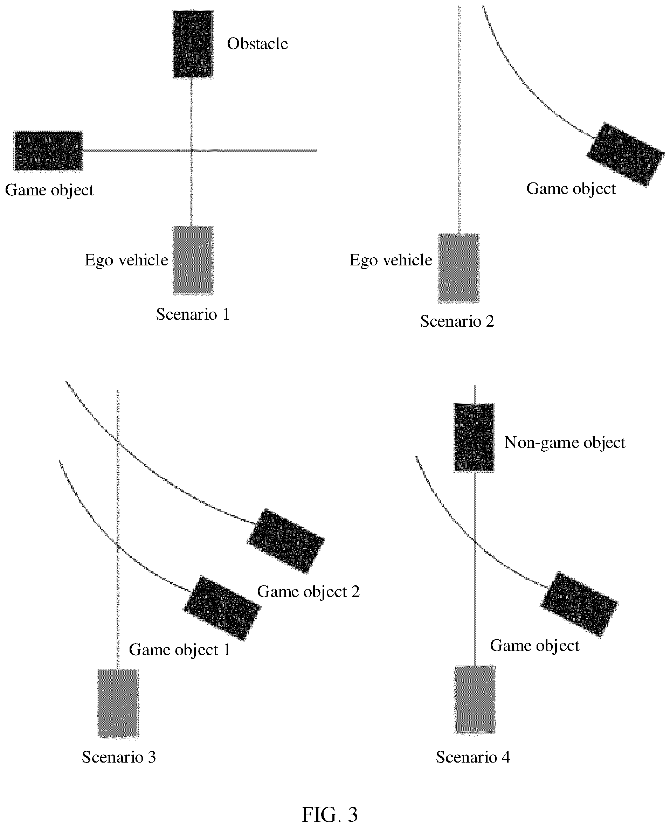

Generally, scenarios constructed between the ego vehicle and the game object may be roughly classified into four scenarios, as shown in FIG. 3, which are specifically as follows (using an example in which the ego vehicle goes straight):

Scenario 1: Single-obstacle decision making (there is a point at which tracks intersect): For example, the ego vehicle goes straight, and the obstacle goes across.

Scenario 2: Single-obstacle decision making (there is no point at which tracks intersect, and a potential conflict exists): For example, the ego vehicle goes straight, and the obstacle enters a location that is in front of the ego vehicle and that is in an adj acent lane or a same lane.

Scenario 3: Multi-obstacle decision making (there are a plurality of game objects): For example, the ego vehicle goes straight, and the plurality of obstacles cross a planned path of the ego vehicle.

Scenario 4: Multi-obstacle decision making (there are a game object and a non-game object): For example, the ego vehicle goes straight and follows a vehicle that is ahead (the non-game object), while the obstacle crosses from a side of the ego vehicle.

In this application, when processing a multi-obstacle decision making process, the game decision making unit 302 splits the multi-obstacle decision making process into a plurality of single-obstacle decision making processes, determines a feasible region between the ego vehicle and each obstacle, and then extracts a common game policy, where each feasible region includes the common game policy, to obtain an intersection of these feasible regions. If the intersection exists, an optimal game policy of each game object in the intersection is calculated. If the intersection does not exist, a most conservative decision making result in a current situation is output, for example, the ego vehicle outputs a "yielding" policy. Therefore, herein in this application, the game decision making unit 302 only needs to process decision making between the ego vehicle and one game object. A specific implementation process is as follows:

1. Sampling policy space generation: The game decision making unit 302 determines upper decision limits and lower decision limits of game policies of two game parties based on a predefined game manner, the road condition information, and motion capabilities of the ego vehicle and the obstacle, to obtain a proper game decision range of the two game parties. Then, feasible game policy sampling is performed on the ego vehicle and the obstacle in the game policy range to obtain a quantity of feasible game policies of the two parties, and then the feasible game policies of the two parties are combined to obtain a plurality of different combined game policy spaces.

If both the ego vehicle and the game object are vehicles, during a game, an operation corresponding to the game policy may be of two manners: turning a steering wheel and advancing/retarding a throttle. A steering angle of the vehicle in traveling is changed by turning the steering wheel, so that the vehicle changes a transverse displacement to implement a behavior such as overtaking or avoiding. An acceleration and a speed of the vehicle are changed by advancing/retarding the throttle, so that the vehicle changes a longitudinal displacement to implement a behavior such as overtaking or avoiding.

For example, the game policy is changing an acceleration. The game decision making unit 302 determines, based on received data such as distances from the ego vehicle and the game object to a theoretical collision location, maximum and minimum acceleration values of the vehicle, the speed of the ego vehicle, and a maximum speed limit of a road, different types of game policies obtained by changing acceleration values of the ego vehicle and the game object, and uses a set of the game policies as the game policy range. Then, n acceleration values of the ego vehicle and m acceleration values of the game object are selected in a specified sampling manner, to obtain $n \times m$ possible combined game policy spaces of the two parties.

2. Policy cost evaluation: A policy cost of each game policy calculated by the game decision making unit 302 is related to factors such as safety, comfort, passing efficiency, right of way, a probability of allowing an obstacle to pass, and a historical decision making manner. Therefore, during calculation of the policy cost of each game policy, a cost of each factor may be calculated, and then weighting calculation is performed on the cost of each factor, to obtain the policy cost of each game policy. In this application, the policy cost of each game policy is analyzed by using six factors: a safety cost, a comfort cost, a passing efficiency cost, a right-of-way cost, an obstacle prior probability cost, and a historical decision correlation cost. Details are as follows:

(1) Safety cost: In a game process, the two game parties should keep a proper safe distance from each other. When a distance between the two game parties is less than a safety threshold or the two game parties collide, a comparatively large safety cost is generated. The safety cost is inversely proportional to the distance between the two parties.

(2) Comfort cost: In a game process, the two game parties tend to maintain a current motion status under the condition that the two game parties do not collide. When there is a comparatively large change in the motion status (for example, an acceleration or a transverse acceleration), passenger experience is affected, and a comparatively large experience cost is generated. The comfort cost is inversely proportional to a motion status change degree.

(3) Passing efficiency cost: In a game process, the two game parties tend to pass through a current traffic scenario as quickly as possible to complete the current game process. If the two game parties spend a comparatively large amount of time to complete this game, a comparatively large passing efficiency cost is generated. The passing efficiency cost is inversely proportional to a time for completing the game.

(4) Right-of-way cost: In a game process, the two game parties tend to travel in a traveling sequence specified in a traffic rule. If a difference between a game policy and a traveling rule specified in right-of-way information is comparatively large, a comparatively large right-of-way cost is generated. The right-of-way cost is directly proportional to a degree of violating a regulation in traveling.

(5) Obstacle prior probability cost: In a game process, a decision making result of an obstacle tends to approach a prior probability of a corresponding behavior obtained through observation. If a deviation between a game policy and the prior probability is comparatively large, a comparatively large obstacle prior probability cost is generated. The prior probability of the obstacle is related to a game scenario. If the game scenario is game decision making of overtaking/yielding, the prior probability of the obstacle is a prior probability of overtaking. If the game scenario is game decision making of avoiding/not avoiding, the prior probability of the obstacle is a prior probability of avoiding.

(6) Historical decision correlation cost: In a game process, the two game parties tend to maintain a decision making result obtained in a game process of a previous frame. When a game result changes, a comparatively large historical decision correlation cost is generated.

3. Policy feasible region generation: The game decision making unit 302 weights the foregoing six factor costs according to a specific rule to obtain the policy cost of each game policy, then performs properness evaluation and screening on all factors weighted on the policy cost of each game policy, and deletes a policy cost of a game policy that includes an improper factor, so as to obtain a policy cost of a proper game policy through screening, and use the proper game policy as a feasible region between the ego vehicle and the game object.

The rule-based decision making unit 303 is configured to estimate a feasible region of the non-game object. In this application, to handle a problem of a decision making result conflict between the non-game object and the game object, a feasible region of the ego vehicle for a constraint area constituted by the non-game object should be estimated based on the constraint area. For example, for a longitudinal (along a road direction in which the ego vehicle travels) action game (for example, overtaking/yielding), a virtual wall is constructed through virtualization in front of the ego vehicle as an upper acceleration limit constraint; and for a transverse (perpendicular to the road direction in which the ego vehicle travels) action game, the ego vehicle uses, as a constraint, a maximum transverse deflection range constituted by the non-game object. In this way, a feasible region between the ego vehicle and the non-game object is constructed. The virtual wall is a longitudinal constraint generated by decision making/planning, and usually refers to a speed at which the ego vehicle passes through a location point.

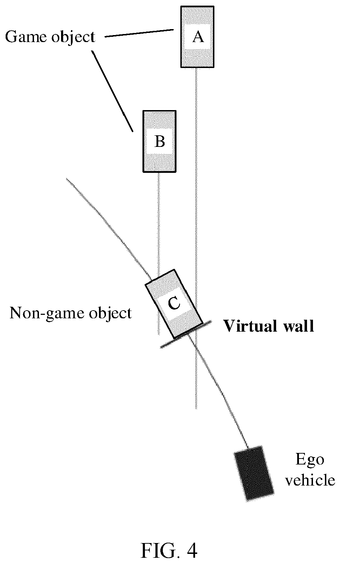

For example, in a scenario shown in FIG. 4, an ego vehicle (a black box) and game objects (A and B) perform decision making on overtaking/yielding. An optimal game policy of the ego vehicle may be overtaking. However, because there is an obstacle in front of the ego vehicle, the ego vehicle cannot perform an overtaking action. Therefore, an upper acceleration limit of the ego vehicle in this scenario should be generated based on a target vehicle followed by the ego vehicle, and the upper acceleration limit is used as a feasible region between the ego vehicle and the non-game object.

After obtaining a feasible region between the ego vehicle and each game object sent by the game decision making unit 302 and a feasible region between the ego vehicle and each non-game object sent by the rule-based decision making unit 303, the conflict processing unit 304 calculates an intersection of the received feasible regions, and if the intersection exists, calculates an optimal game policy of the ego vehicle for each game object in the intersection, or if the intersection does not exist, outputs a decision making result that is most conservative in a current situation, for example, a decision making result of yielding to each game object.

This application provides an object decision making solution that is for a self-driving vehicle and that is based on a sampling game space. Data sent by a prediction module, a navigation module, and a sensor system is received, to construct a sampling game space between the ego vehicle and each game object. Then, a cost of each factor affecting a vehicle game is calculated, a policy cost of each game policy is obtained through weighting, and a policy cost of a game policy that includes an improper factor is removed, to obtain a feasible region between the ego vehicle and each game object. Then, an optimal game policy of the ego vehicle for each game object is calculated with reference to a feasible region between the ego vehicle and a non-game object. The solution does not depend on a scenario specification, and therefore is applicable to all scenarios. In addition, in a game process, when faced with a plurality of game objects, by calculating an intersection of feasible regions between the ego vehicle and all the game objects, the ego vehicle can game with the plurality of game objects at the same time.

The following specifically describes, by using two embodiments, how the game decision making unit 302 determines a feasible region.

**Embodiment 1**

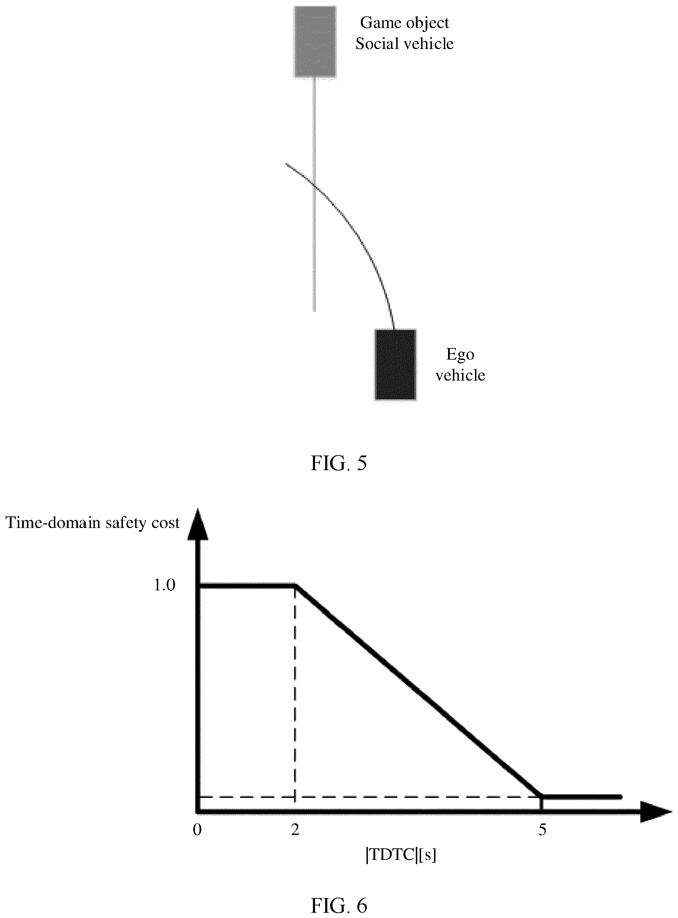

As shown in FIG. 5, in a traffic scenario with a track conflict, a planned path of an ego vehicle (black-colored) conflicts with a predicted path of a social vehicle (gray-colored), that is, a collision may occur at an intersection point. An upper-layer module provides a planned reference path of the ego vehicle, a predicted track of the social vehicle, current speeds and accelerations of the ego vehicle and the social vehicle, and a distance from each of the ego vehicle and the social vehicle to the collision point. The ego vehicle needs to perform a longitudinal game, for example, perform overtaking/yielding on an obstacle, based on the foregoing information.

1. Sampling policy space generation

A longitudinal game policy between an ego vehicle and a game object may be represented by a magnitude of acceleration/deceleration (overtaking/yielding). First, an upper decision limit and a lower decision limit of the game policy (acceleration) are generated. The upper decision limit and the lower decision limit are obtained based on longitudinal vehicle dynamics, kinematic constraints, and a relative location and speed relationship between the ego vehicle and the game object. In the scenario in FIG. 5, at a current moment, a speed of the ego vehicle is 17 km/h, a speed of the vehicle going straight in an opposite direction is 15 km/h, a distance from the ego vehicle to a point X is 20.11 m, a distance from the game vehicle in the opposite direction to the point X is 35.92 m, a feedforward acceleration (planned acceleration) of the ego vehicle is 0.5 m/s$^2$, an observed acceleration of the ego vehicle is -0.67 m/s$^2$, an observed acceleration of the social vehicle is 0.0 m/s$^2$, a static speed limit of a road is 60 km/h, and a path-curvature speed limit is 30 km/h. In this case, an allowed acceleration range of the ego vehicle is [-4.0, 2.0] m/s$^2$, and an allowed acceleration range of the social vehicle is [-3.55, 3.0] m/s$^2$. For a balance between calculation complexity and sampling policy space precision, an acceleration interval is set to 1 m/s$^2$. Finally, a sampling policy space shown in Table 1 may be generated.

## Table 1 Constructing a game policy space according to Embodiment 1

| Ego-vehicle ACC / Game-vehicle ACC | −4 | −3 | −2 | −1 | 0 | 1 | 2 |
|---|---|---|---|---|---|---|---|
| −3.55 | | | | | | | |
| −2.55 | | | | | | | |
| −1.55 | | | | | | | |
| −0.55 | | | | | | | |
| 0.45 | | | | | | | |
| 1.45 | | | | | | | |
| 2.45 | | | | | | | |
| 3.0 | | | | | | | |

2. Policy cost evaluation of a game policy

A policy cost of each game policy is quantitatively described by using a cost of each design factor. Costs mentioned in this application include a safety cost, a comfort cost, an efficiency cost, a prior probability cost of a game object, a right-of-way cost, and a historical decision making result correlation cost, and a total cost is a weighted sum of the six costs. A total benefit corresponding to each decision making policy pair in the policy space is calculated. Herein, a policy pair [1.0, -1.45] (a sampled acceleration of the ego vehicle is 1 m/s$^2$, and a sampled acceleration of the social vehicle is 1.45 m/s$^2$) is used as an example for detailed description.

(1) The safety cost may be classified into a time-domain safety cost and a space-domain safety cost. The time-domain safety cost is related to a time difference to collision (time difference to collision, TDTC) between the ego vehicle and the game vehicle. A larger TDTC indicates higher safety and a smaller time-domain safety cost. A quantized relationship is shown in FIG. 6. A policy pair [1.0, 1.45] is used as an example. A time for the ego vehicle to arrive at the collision point is eTTC=3.41s, and a time for the game vehicle to arrive at the collision point is oTTC=5.02s. In this case, a TDTC of the policy pair is: |TDTC|=|eTTC-oTTC|=|-1.65|=1.65s. Based on the relationship shown in FIG. 6, the time-domain safety cost may be obtained through calculation as follows: 100000*1.0=100000, where 100000 is a time-domain safety cost weight.

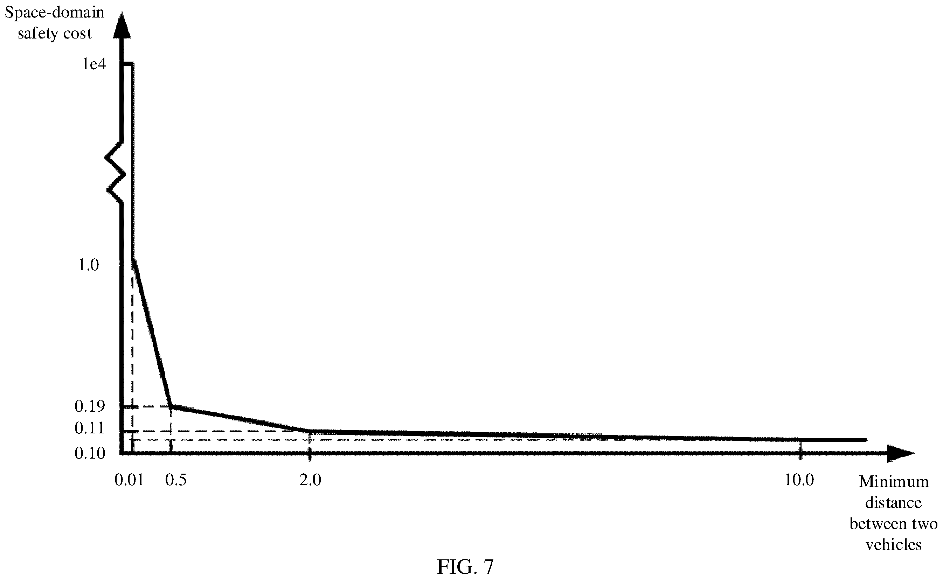

With respect to space-domain safety, recursion is performed on future motions of the two game parties along a planned path of the ego vehicle and a predicted path of the obstacle based on sampled accelerations corresponding to game policies of the two vehicles, to obtain a minimum distance between the two vehicles in future 10s (where 0.2s is used as a recursive step). A larger minimum distance indicates higher safety and a smaller space-domain safety cost. A quantized relationship is shown in FIG. 7. For example, the minimum distance between the two vehicles obtained through recursion is 0.77 m. In this case, the space-domain safety cost is 10000*0.1756=1756, where 10000 is a space-domain safety cost weight.

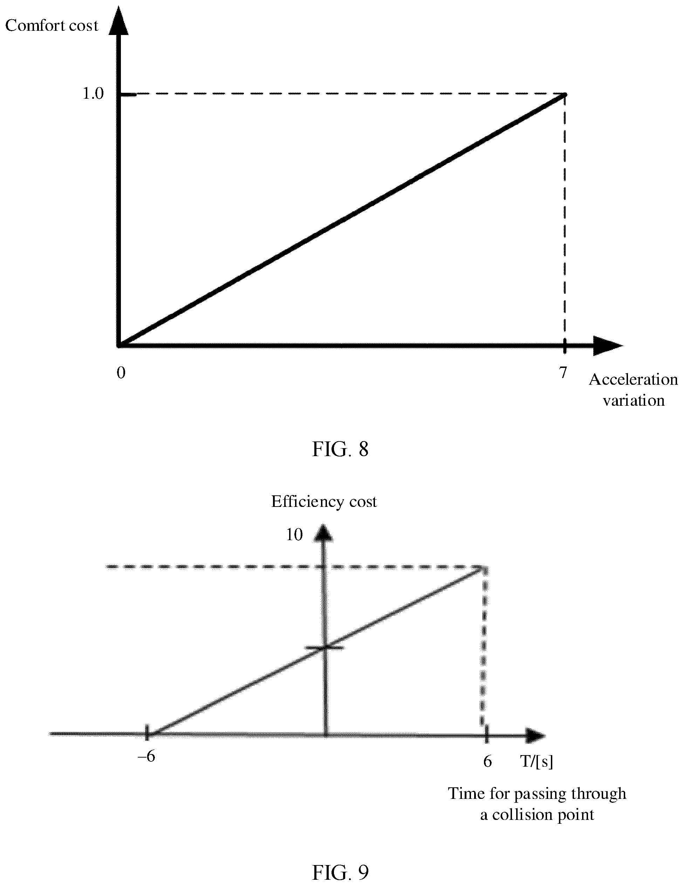

(2) The comfort cost is related to a jerk (jerk) of the ego vehicle/game object. A smaller jerk indicates better comfort and a smaller comfort cost. A quantized relationship is shown in FIG. 8. The policy pair [1.0, 1.45] is used as an example. For the ego vehicle, an acceleration variation of the ego vehicle is eDeltaAcc=1-(-0.67)=1.67 m/s$^2$, and a comfort cost of the ego vehicle is eComf cost=100*0.315=31.5, where 100 is a weight of the comfort cost of the ego vehicle. For the game vehicle, an acceleration variation of the game vehicle is oDeltaAcc=1.45-(0)=1.45 m/s$^2$, and a comfort cost of the game vehicle is oComfcost=300*0.286=85.94, where 300 is a weight of the comfort cost of the social vehicle.

(3) The efficiency cost is related to a time for passing through the collision point. In a case of decelerating and yielding, the time for passing through the collision point is comparatively long, and therefore the efficiency cost increases. On the contrary, in a case of accelerating, the time for passing through the collision point is comparatively short, and therefore the efficiency cost decreases. A quantized relationship is shown in FIG. 9. In FIG. 9, a horizontal axis represents a difference deltaPassTime between a time for traveling through the collision point samplePassTime obtained through calculation by using an acceleration in the policy space and a time for passing through the collision point realPassTime obtained by using a currently observed speed and acceleration, and a vertical axis represents the efficiency cost.

For example, a time for the ego vehicle to pass through the collision point at a current acceleration and speed is eRealPassTime=4.47s, a time for the game vehicle to pass through the collision point at a current acceleration and speed is oRealPassTime=7.2s, and the policy [1.0, 1.45] is used. For the ego vehicle, a time for passing through the collision point is eSamplePassTime=3.41s, a difference from the passing time calculated based on the observed quantities is eDeltaPassTime=eSamplePassTime-eRealPassTime=3.41-4.47=-1.06, and an efficiency cost is ePass cost=100*4.1150=411.5, where 100 is a weight of the efficiency cost of the ego vehicle.

For the game vehicle, a time for passing through the collision point is oSamplePassTime=5.02s, a difference from the passing time calculated based on the observed quantities is oDeltaPassTime=oSamplePassTime-oRealPass-Time=5.02-7.2=-2.18s, and an efficiency cost is oPass cost=100*2.3324*233.24, where 100 is a weight of the efficiency cost of the social vehicle.

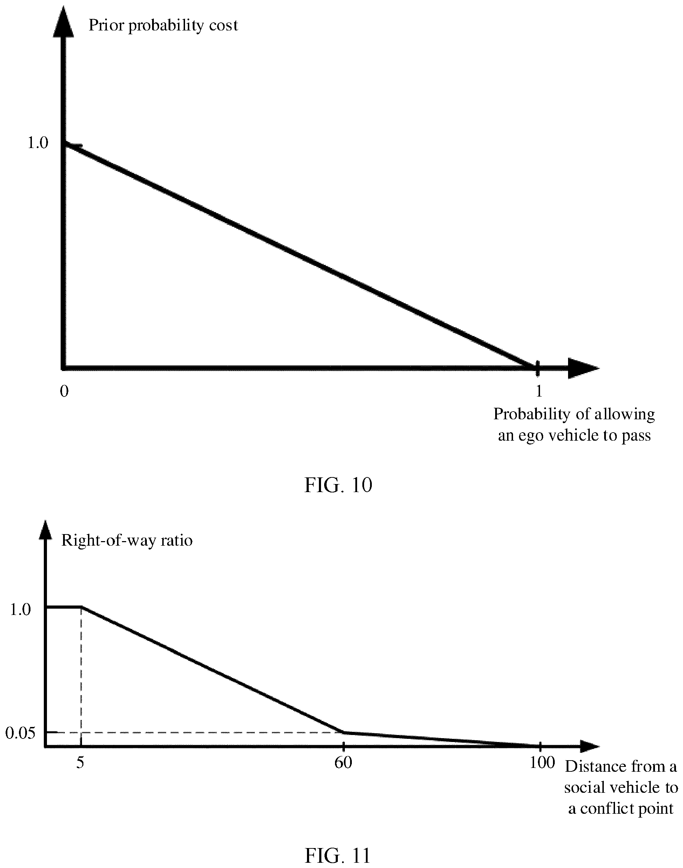

(4) The prior probability cost of the game object is related to a probability that the game object allows the ego vehicle to pass. A larger probability of yielding indicates a smaller prior probability cost of the game object. A quantized relationship is shown in FIG. 10. The yielding probability of the game object reflects a driving style of the game object, and is a dynamic factor that depends on information such as a historical speed, an acceleration, and a location of the game object. The yielding probability of the game object is an input of a game module. In the scenario described above, if the yielding probability of the game object is 0.2, a corresponding eProb cost of overtaking by the ego vehicle is (1-0.2)*1000=800, where 1000 is a prior probability cost weight.

(5) The right-of-way cost describes a degree to which the two game parties comply with a traffic rule. A vehicle with right of way has a higher advantage of overtaking, and an overtaking cost of such a vehicle should decrease, whereas a yielding cost of the ego vehicle should increase. The right-of-way cost depends on a current traffic right-of-way relationship between the social vehicle and the ego vehicle, and an objective distance from the social vehicle to a conflict point. A formula for calculating the right-of-way cost is as follows:

Right-of-way cost=Dynamic right-of-way ratio of a scenario*Dynamic right-of-way weight

A right-of-way ratio of a scenario is equal to f(distance from the social vehicle to the conflict point), which is a non-linear function, and a range thereof is [0.0, 1.0]. The right-of-way ratio of a scenario is a concept of obtaining right of way by the social vehicle, and is related to the distance between the social vehicle and the conflict point. A specific quantized relationship is shown in FIG. 11. If the distance between the social vehicle and the conflict point is less than 5 m, the right-of-way ratio of a scenario is 1. If the distance between the social vehicle and the conflict point is greater than 5 m, the right-of-way ratio of a scenario decreases as the distance between the social vehicle and the conflict point increases. If the distance between the social vehicle and the conflict point is greater than 100 m, the right-of-way ratio of a scenario is 0.

A formula for calculating the dynamic right-of-way weight is: Dynamic right-of-way weight=Basic value of a right-of-way weight+1000*right-of-way value of a scenario.

A scenario in which the game object goes straight and the ego vehicle turns left is used as an example. The game object has right of way, a right-of-way value of the scenario is 0.4, the distance from the game vehicle to the conflict point is 35.92 m, and a right-of-way cost of overtaking by the ego vehicle increases, that is, eGWRoadRight cost=f(35.92)*(5000+1000*0.4)=0.61*5400=3305.67, where 500 is a basic value of a right-of-way weight.

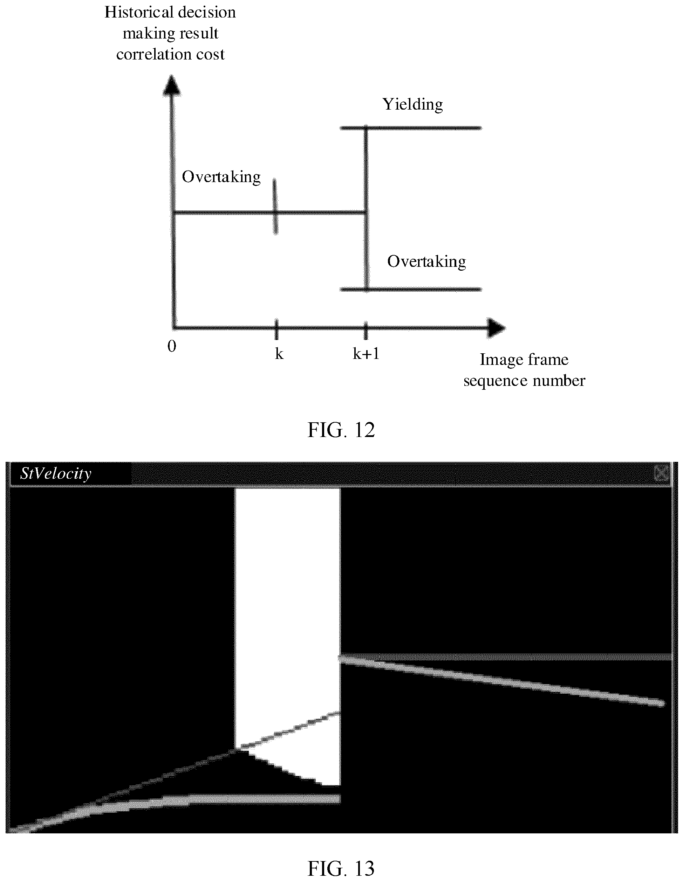

(6) The historical decision making result correlation cost is introduced to prevent decision jumps of two consecutive frames. If a previous frame is overtaking, an overtaking cost of a current frame is reduced, so that it is easier for the current frame to output an overtaking decision. If a previous frame is yielding, a yielding cost of a current frame is reduced, so that it is easier for the current frame to output a yielding decision. A quantized relationship between a historical decision making result correlation cost and an overtaking cost or a yielding cost corresponding to each frame of image is shown in FIG. 12. If the $K^{th}$ frame indicates overtaking, after the $(K+1)^{th}$ frame of image is obtained, if an overtaking cost is obtained through calculation, a correlation cost between the $K^{th}$ frame of image and the $(K+1)^{th}$ frame of image is reduced; or if a yielding cost is obtained through calculation, a correlation cost between the $K^{th}$ frame of image and the $(K+1)^{th}$ frame of image is increased.

A return difference for switching a decision making result of the ego vehicle from yielding to overtaking is 50. That is, if a previous frame is YD, a YD cost of a current frame is reduced by 50. On the other hand, a return difference for switching a decision making result of the ego vehicle from overtaking to yielding is 20. That is, if a previous frame is GW, a GW cost of a current frame is reduced by 20. When a previous-frame decision is yielding by the ego vehicle, a historical decision correlation cost is 50 this time. From the following section, it can be learned that an optimal YD cost of this frame is 11087.57. Therefore, a final optimal YD cost is 11087.57-50=11037.57.

A final cost Total corresponding to a policy space point {1, 1.45} can be obtained by adding up the foregoing six costs, which is as follows:

$$\text{Cost Total}=100000+3305.67+1756+31.50+85.94-50+800+411.5+233.24=106573.85$$

All items in the formula are respectively a time-domain safety cost, a right-of-way cost, a space-domain safety cost, an ego-vehicle comfort cost, a game-vehicle comfort cost, an interframe correlation cost, a prior probability cost, and an efficiency cost.

In addition, as the time difference to collision (TDTC=-1.65s) between the two vehicles is determined, it can be determined that the ego vehicle arrives at the collision point first. This policy point corresponds to a decision of overtaking by the ego vehicle. Then, calculation of the foregoing steps is performed on each action combination pair in Table 1, so as to obtain total costs corresponding to all action combination pairs, as shown in Table 2.

## Table 2 Cost of each game policy pair in Embodiment 1

| Ego-vehicle ACC / Game-vehicle ACC | −4 | −3 | −2 | −1 | 0 | 1 | 2 |
|---|---|---|---|---|---|---|---|
| −3.55 | **1904604.43** | **1786690.83** | **1720884.54** | **1523491.38** | 14491.24 | 14504.09 | 14516.95 |
| −2.55 | **1796516.45** | **1763606.88** | **1697800.59** | **1500407.43** | 14452.67 | 14465.52 | 14478.38 |
| −1.55 | **1743689.61** | **1710780.04** | **1644973.75** | **1447580.59** | 14414.09 | 14426.95 | 14439.81 |
| −0.55 | **1498779.70** | **1465870.13** | **1400063.83** | **1202670.67** | 14375.52 | 14388.38 | 14401.24 |
| 0.45 | *11100.15* | *11087.30* | *11143.20* | *12024.26* | 93793.98 | 70189.74 | 68761.46 |
| 1.45 | *11138.72* | *11125.87* | *11181.77* | *12076.64* | 100103410.26 | 106573.85 | 105324.59 |
| 2.45 | *11177.30* | *11164.44* | *11220.34* | *100010138.72* | 100103448.84 | 100103461.69 | 100103474.55 |
| 3.0 | *11198.50* | *11185.64* | *11241.54* | *100010159.92* | *100100164.36* | 100103482.89 | 100103495.75 |

Fonts of cost values in Table 2 are classified into a normal font, a bold font, and an italic font. When the ego vehicle arrives at the conflict point earlier than the game vehicle, it indicates that an ego-vehicle behavior is overtaking (a cost value corresponding to the normal font represents a policy cost of a game policy of overtaking). When the ego vehicle arrives at the conflict point later than the game vehicle, it indicates that an ego-vehicle behavior is yielding (a cost value corresponding to the italic font represents a policy cost of a game policy of yielding). When both the ego vehicle and the game vehicle brake before arriving at the conflict point, it indicates that behaviors of the ego vehicle and the game vehicle are yielding (a cost value corresponding to the bold font represents a policy cost of a game policy of yielding by both the ego vehicle and the game vehicle).

3. Policy feasible region generation

Through step 2, all action combinations in a valid action space between the ego vehicle and the game vehicle and a cost Total corresponding to each action combination pair can be generated. For these action combinations, evaluation and screening are performed on all sub-costs, and all proper candidate combinations are selected to constitute a feasible region of the ego vehicle for the game object. Sub-costs such as the comfort cost and the right-of-way cost are all considered as valid values within specified intervals of the sub-costs.

For the safety cost, validity needs to be determined, and an improper game policy pair is directly deleted. For the time-domain safety cost, if the TDTC is less than a threshold (1s), it is considered that there is a risk of collision between the ego vehicle and the social vehicle. Such an action combination cannot be used as a valid action output. Therefore, such an action pair is deleted. Similarly, for the space safety cost, if a minimum distance obtained through recursion is less than a threshold (0.01 m), it is considered that the ego vehicle and the game vehicle collide with each other. Therefore, such an action pair is deleted. For the efficiency cost, if both the vehicles stop before arriving at the conflict point, passing efficiency is reduced, which is not feasible. Therefore, such an action pair is deleted. All remaining valid actions may constitute the feasible region of the policy space, as shown in Table 3.

## Table 3 Feasible policy set (feasible region) and costs thereof in Embodiment 1

| Ego-vehicle ACC  Game-vehicle ACC | −4 | −3 | −2 | −1 | 0 | 1 | 2 |
|---|---|---|---|---|---|---|---|
| −3.55 | **Delete-3** | **Delete-3** | **Delete-3** | **Delete-3** | 14491.24 | 14504.09 | 14516.95 |
| −2.55 | **Delete-3** | **Delete-3** | **Delete-3** | **Delete-3** | 14452.67 | 14465.52 | 14478.38 |
| −1.55 | **Delete-3** | **Delete-3** | **Delete-3** | **Delete-3** | 14414.09 | 14426.95 | 14439.81 |
| −0.55 | **Delete-3** | **Delete-3** | **Delete-3** | **Delete-3** | 14375.52 | 14388.38 | 14401.24 |
| 0.45 | *11100.15* | *11087.30* | *11143.20* | *12024.26* | 93793.98 | 70189.74 | 68761.46 |
| 1.45 | *11138.72* | *11125.87* | *11181.77* | *12076.64* | Delete-2 | Delete-1 | Delete-1 |
| 2.45 | *11177.30* | *11164.44* | *11220.34* | *Delete-2* | Delete-2 | Delete-2 | Delete-2 |
| 3.0 | *11198.50* | *11185.64* | *11241.54* | *Delete-2* | *Delete-2* | Delete-2 | Delete-2 |

"Delete-1" is an invalid action output of the time-domain safety cost, "Delete-2" is an invalid action output of the space-domain safety cost, and "Delete-3" is an invalid action output of the passing cost.

It can be learned from the foregoing analysis that the feasible region of the ego vehicle for the game object is a valid acceleration combination in the table. A game policy with a smallest cost Total is selected from the feasible region as a final decision making result. That is, a global benefit corresponding to the game policy with the smallest cost Total is largest, and such a game policy is used as an optimal action combination of the ego vehicle and the game vehicle, so that sufficient safety, efficiency, and comfort can be ensured at the same time. When the optimal policy pair is selected for decision making, a game decision making module sends, to a downstream motion planning module, an optimal acceleration to be used by the game object. The motion planning module performs planning based on the acceleration value.

In the scenario shown in FIG. 5, the ego vehicle does not have right of way (the traffic rule specifies that a vehicle going straight has precedence over a vehicle turning), and in an entire process, the obstacle is tagged with a label "yielding". When it is determined that the game object is to perform overtaking, an acceleration for overtaking by the game object is calculated. The acceleration value is sent to a motion planner, and a corresponding acceleration value of the ego vehicle is selected based on a corresponding acceleration combination in the feasible region, so that a yielding action is accurately planned.

When the ego vehicle and the game object just enter a crossing, the feasible region of the ego vehicle for the game object is comparatively large, and interaction can be completed by using accelerations in a yielding range (-4, 0) m/s$^2$ and an overtaking range [0, 2] m/s$^2$. However, based on a result of weighted summation of all the costs, it can be learned that a game pair constituted by the ego vehicle and the game object has an optimal solution when an acceleration policy pair of (-3, 0.45) m/s$^2$ is selected. Compared with other solutions, such a game result has the following main advantage: The game result complies with right-of-way descriptions, and also ensures sufficient safety and comfort. In the optimal game policy, it is determined that the obstacle is to perform overtaking at an acceleration of 0.45 m/s$^2$. The acceleration value is sent to a motion planning layer. The motion planning module modifies a predicted track of the obstacle based on the acceleration value. This is specifically embodied by translation of an occupation area of the obstacle on a T-axis. Speed planning is performed by using a (station-time, ST) relationship graph of longitudinal distance and time occupation of an obstacle on a path of the vehicle in FIG. 13, to implement safe yielding.

The foregoing process mainly describes how to perform a game of each frame. For an overall object decision making process, when an object gradually approaches, the ego vehicle yields to the game object in the first game frame. In a process in which the game object continuously approaches a track intersection point, a safety cost of overtaking by the ego vehicle continuously increases. Therefore, in a process of optimal game result selection, the ego vehicle inevitably keeps yielding to the game object, until the game object travels past the track intersection point, and the game ends.

The overtaking/yielding decision making solution for an obstacle in Embodiment 1 of this application does not depend on a specific obstacle interaction form or a track intersection feature, but uses a sensor system to obtain traffic scenario information, so as to properly abstract a traffic scenario, thereby implementing application scenario generalization. In addition, an acceleration that should be used by the ego vehicle for overtaking/yielding and an acceleration that is to be used by the obstacle for overtaking/yielding are obtained, and these values are used to affect motion planning, so as to ensure correct execution of a decision instruction.

**Embodiment 2**

The scenario shown in FIG. 4 is used as an example. An ego vehicle turns left at an unprotected crossing, a social vehicle A and a social vehicle B go straight in a lane in an opposite direction, and there is a social vehicle C traveling in a same direction ahead in a traveling path of the ego vehicle. The ego vehicle needs to follow the social vehicle C, and a game relationship is formed between the ego vehicle and the social vehicles A and B.

It is assumed that, at a current moment, a speed of the ego vehicle is 8 km/h, a speed of the vehicle A going straight in the opposite direction is 14 km/h, a speed of the vehicle B going straight in the opposite direction is 14 km/h, a distance from the ego vehicle to an intersection point with the vehicle A is 21 m, a distance from the ego vehicle to an intersection point with the vehicle B is 25 m, a distance from the vehicle A to the intersection point with the ego vehicle is 35 m, a distance from the vehicle B to the intersection point with the ego vehicle is 24 m, a feedforward acceleration of the ego vehicle is 0.22 m/s$^2$, an observed acceleration of the ego vehicle is 0.0 m/s$^2$, an observed acceleration of the social vehicle is 0.0 m/s$^2$, a static speed limit of a road is 40 km/h, and a path-curvature speed limit is 25 km/h. A speed of the social vehicle C is 10 km/h, an acceleration of the vehicle C is 0.0 m/s$^2$, and a distance from the rear of the vehicle C to the front of the ego vehicle is 15 m. An allowed acceleration sampling range of the ego vehicle is [-4, 2] m/s$^2$, and an allowed acceleration sampling range of the social vehicle A and the social vehicle B is [-3.55, 3.0] m/s$^2$. For a balance between calculation complexity and sampling policy space precision, an acceleration interval is set to 1 m/s$^2$.

A single-vehicle game is performed on each of the social vehicle A and the social vehicle B, where a cost function design, weight allocation, and a feasible-region selection manner are consistent with those in Embodiment 1. Feasible regions corresponding to the social vehicle A and the social vehicle B may be separately obtained. A feasible region between the ego vehicle and the social vehicle A is shown in Table 4.

### Table 4 Feasible region between the ego vehicle and the social vehicle A in Embodiment 2

| Ego-vehicle ACC / Vehicle-A ACC | −4 | −3 | −2 | −1 | 0 | 1 | 2 |
|---|---|---|---|---|---|---|---|
| −3.55 | **Delete-3** | **Delete-3** | **Delete-3** | **Delete-3** | 15441.68 | 13454.78 | 10462.08 |
| −2.55 | **Delete-3** | **Delete-3** | **Delete-3** | **Delete-3** | 15412.89 | 13426.25 | 10432.26 |
| −1.55 | **Delete-3** | **Delete-3** | **Delete-3** | **Delete-3** | 15394.99 | 13407.84 | 10413.67 |
| −0.55 | **Delete-3** | **Delete-3** | **Delete-3** | **Delete-3** | 19550.45 | 13093.85 | 11966.53 |
| 0.45 | *11174.12* | *11161.26* | *11148.70* | *11135.31* | *11150.17* | | |
| 1.45 | *11212.69* | *11199.83* | *11187.27* | *11174.06* | *11180.04* | | |
| 2.45 | *11251.26* | *11238.41* | *11225.84* | *11212.81* | *11215.53* | *96059.86* | |
| 3.0 | *11272.46* | *11259.61* | *11247.04* | *11234.18* | *11234.41* | *90636.81* | |

Fonts of cost values in Table 2 are classified into a normal font, a bold font, and an italic font. A cost value corresponding to the normal font represents overtaking by the ego vehicle. A cost value corresponding to the italic font represents yielding by the ego vehicle. A cost value corresponding to the bold font represents braking by both the ego vehicle and the game vehicle before arriving at a conflict point. Feasible regions [0.45, -1] and [-1.55, -2] between the ego vehicle and the social vehicle A correspond to optimal costs in a whole set of overtaking or yielding costs.

A feasible region between the ego vehicle and the social vehicle B is shown in Table 5.

**Table 5 Feasible region between the ego vehicle and the social vehicle A in Embodiment 2**

| Ego-vehicle ACC / Vehicle-A ACC | –4 | –3 | –2 | –1 | 0 | 1 | 2 |
|---|---|---|---|---|---|---|---|
| –3.55 | **Delete-3** | **Delete-3** | **Delete-3** | **Delete-3** | | 14452.78 | 14278.90 |
| –2.55 | **Delete-3** | **Delete-3** | **Delete-3** | **Delete-3** | | 14414.21 | 14300.33 |
| –1.55 | **Delete-3** | **Delete-3** | **Delete-3** | **Delete-3** | | 14375.64 | 14301.76 |
| –0.55 | **Delete-3** | **Delete-3** | **Delete-3** | **Delete-3** | | 14337.07 | 14303.19 |
| 0.45 | *11105.99* | *11093.13* | *11080.27* | *11067.41* | | 14786.85 | 14408.23 |
| 1.45 | *11144.56* | *11131.70* | *11118.84* | *11105.99* | | | |
| 2.45 | *11183.13* | *11170.27* | *11157.41* | *11144.56* | | | |
| 3.0 | *11204.33* | *11191.47* | *11178.61* | *11165.76* | | | |

Fonts of cost values in Table 2 are classified into a normal font, a bold font, and an italic font. A cost value corresponding to the normal font represents overtaking by the ego vehicle. A cost value corresponding to the italic font represents yielding by the ego vehicle. A cost value corresponding to the bold font represents braking by both the ego vehicle and the game vehicle before arriving at a conflict point. Feasible regions [0.45, -1] and [-3.55, -2] between the ego vehicle and the social vehicle A correspond to optimal costs in a whole set of overtaking or yielding costs.

For the social vehicle C (a non-game object), a decision of the ego vehicle cannot cause a risk with the vehicle C, and a feasible acceleration region of the ego vehicle needs to be estimated based on the speed of the ego vehicle, the acceleration of the ego vehicle, the speed of the social vehicle C, the acceleration of the social vehicle C, and the distance from the ego vehicle to the social vehicle C. This part is implemented by a longitudinal planning module, and a calculation model thereof is as follows:

$$accUpLimit=speedGain*(objV-egoV)+distTimeGain*(distance\ to\ a\ vehicle\ ahead-minimum\ following\ distance)/egoV$$

Herein, accUpLimit is an upper decision limit of an acceleration, objV is an obstacle speed, egoV is an ego-vehicle speed, and speedGain and distTimeGain are adjustable parameters.

Then, the calculation model is directly used to output a value, that is, for the social vehicle C, parameters in this scenario are substituted into the foregoing calculation model to obtain the following:

$$0.85*(10/3.6-8/3.6)+0.014*(15-4.56)/(8/3.6)=0.8$$

That is, an upper bound of the acceleration of the ego vehicle is 0.8 m/s$^2$, and the feasible region is [-4, 0.8] m/s$^2$.

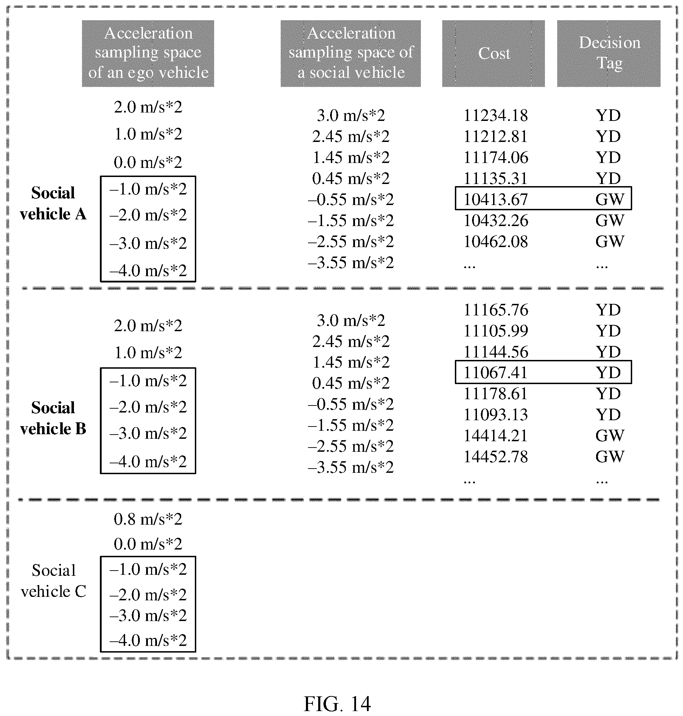

According to this embodiment, when games are respectively performed on the social vehicles A and B, obtained results are overtaking the vehicle A and yielding to the vehicle B. However, in actuality, such actions cannot be completed at the same time. Therefore, multi-vehicle conflict resolution needs to be performed. With reference to the feasible regions corresponding to the foregoing three social vehicles, a schematic diagram of conflict resolution is shown in FIG. 14. Data framed in columns "Cost" and "Decision Tag" is a cost corresponding to an optimal decision of a single vehicle, and data framed in a column "Ego-vehicle acceleration sampling space" is a common feasible region of the ego vehicle for the three social vehicles.

For the feasible regions formed for the game social vehicles A and B and the non-game vehicle (the social vehicle C), an intersection of the feasible regions is first calculated, to obtain the common feasible region of the ego vehicle for the three objects, which is [-4.0, -1.0] m/s$^2$. Therefore, an optimal policy cost is searched for in the common region [-4.0, -1.0] m/s$^2$. A sum of policy costs of the ego vehicle for each of the social vehicles A and B in the common feasible region is calculated, to obtain a result that an optimal solution exists when the acceleration of the ego vehicle is -1.0. In this case, for the social vehicle A, an optimal cost of the ego vehicle is 11135.31, an expected acceleration of the social vehicle A is 0.45, and a corresponding decision is yielding. For the social vehicle B, an optimal cost of the ego vehicle is 11067.41, an expected acceleration of the social vehicle B is 0.45, and a corresponding decision is yielding.

Therefore, a final comprehensive optimal solution for the two vehicles is: yielding to the social vehicle A (whose expected acceleration is 0.45), and yielding to the social vehicle B (whose expected acceleration is 0.45), where an optimal expected acceleration of the ego vehicle is -1.0. Through this comprehensive decision making of conflict resolution, a maximum global benefit can be obtained, and feasibility of the decision making result for each obstacle is ensured.

In the scenario shown in FIG. 4, the ego vehicle performs comprehensive decision making based on all considered obstacles, to obtain an optimal game result that can satisfy a plurality of obstacles at the same time. When a vehicle on a planned path of the ego vehicle constitutes a virtual-wall constraint on the ego vehicle, the vehicle corresponds to a feasible region whose acceleration range is [-4.0, 0.8]. In a game process, the ego vehicle performs game decision making on the two social vehicles A and B separately, so as to obtain a feasible region of the ego vehicle for each vehicle. The intersection of the three feasible regions is calculated, to obtain the feasible region that satisfies all the obstacles in the scenario. The optimal solution of the ego vehicle for all the game obstacles is obtained in the feasible region, thereby obtaining a result that the ego vehicle needs to yield to both the two obstacles, namely, the social vehicles A and B.

Embodiment 2 mainly resolves a multi-target scenario game problem. For a non-game vehicle, a feasible region corresponding to the non-game vehicle is estimated based on a game type. For a game vehicle, a feasible region is directly obtained, and an optimal solution for all game objects is solved in the feasible region, to achieve consistency of multi-target decision making.

In the multi-vehicle game method proposed in Embodiment 2 of this application, the sampling-space feasible region corresponding to each game vehicle is first obtained, then the feasible region of the ego vehicle is estimated for the non-game vehicle, then the common feasible region is obtained from the feasible regions corresponding to the game vehicles and the non-game vehicle, and the optimal solution thereof is calculated, so that the global optimal solution between the ego vehicle and the plurality of social vehicles is finally obtained.

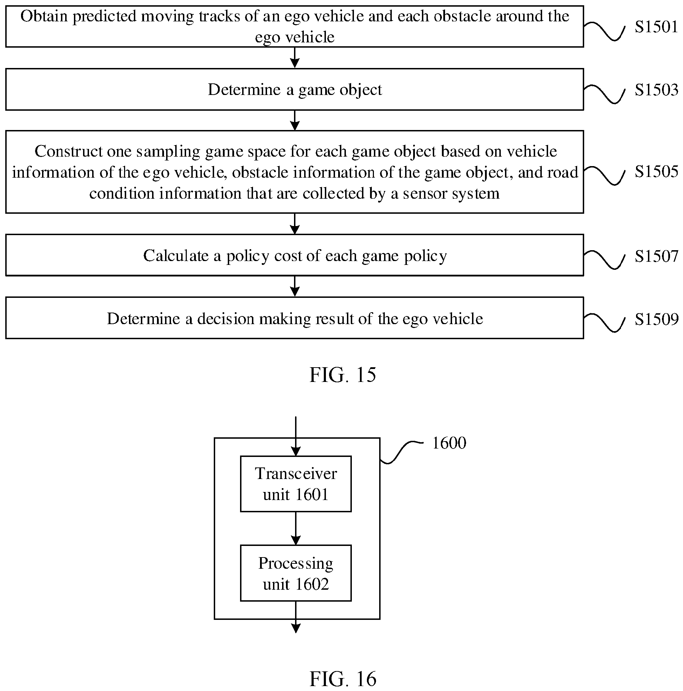

FIG. 15 is a schematic flowchart of a decision making method according to an embodiment of this application. As shown in FIG. 15, this embodiment of this application provides the decision making method. A specific implementation process is as follows.

Step S1501: Obtain predicted moving tracks of an ego vehicle and each obstacle around the ego vehicle.

The predicted moving tracks may be obtained in the following manner: obtaining information such as a vehicle location, an environment around the vehicle, and a vehicle status by using data collected by a sensor such as a GPS unit, an INS unit, an odometer, a camera, or a radar in a sensor system, and then processing the obtained information, so as to predict paths along which the ego vehicle and each obstacle around the ego vehicle are to travel in a future time period.

Step S1503: Determine a game object. The game object is an obstacle that is in the obstacles around the ego vehicle and whose predicted moving track intersects a predicted moving track of the ego vehicle or whose distance from the ego vehicle is less than a specified threshold.

Specifically, in this application, after the predicted moving tracks of the ego vehicle and each obstacle are obtained, it is determined whether the predicted moving tracks of the ego vehicle and each obstacle intersect each other, or it is determined, based on data such as the predicted moving tracks, traveling tracks, speeds, and accelerations of the ego vehicle and each obstacle, whether a distance between a location of an obstacle and a location of the ego vehicle is less than the specified threshold. If it is detected that a predicted moving track of an obstacle intersects the predicted moving track of the ego vehicle or a distance between two vehicles is less than the specified threshold, such an obstacle is classified as the game object, and an obstacle other than the game object is classified as a non-game object.

Step S1505: Construct one sampling game space for each game object based on vehicle information of the ego vehicle, obstacle information of the game object, and road condition information that are collected by the sensor system, where each sampling game space is a set of different game policies used between the ego vehicle and one obstacle in the game object.

In this application, a game policy range of the ego vehicle for each game object, such as an acceleration range or a speed range of the ego vehicle, is determined based on factors such as a predefined game manner, the road condition information, and motion capabilities of the ego vehicle and each obstacle. Then, feasible game policy sampling is performed on the ego vehicle and each game object in the game policy range to obtain a quantity of feasible game policies of the ego vehicle and each game object, and then the feasible game policies of the ego vehicle and each game object are combined to obtain a plurality of different combined game policy spaces.

For example, the game manner is changing an acceleration. Different types of game policies obtained by changing different acceleration values of the ego vehicle and one game object are determined based on received data such as distances from the ego vehicle and the game object to a theoretical collision location, maximum and minimum acceleration values of the vehicle, a speed of the ego vehicle, and a maximum speed limit of a road, and a set of the game policies is used as a game policy range. Then, n acceleration values of the ego vehicle and m acceleration values of the game object are selected in a specified sampling manner, so that $n \times m$ possible combined game policy spaces of the two parties can be obtained.

Step S1507: Calculate a policy cost of each game policy, where the policy cost is a numerical value obtained by performing weighting on each factor weight that affects the policy cost.

Factors affecting the policy cost include safety, comfort, passing efficiency, right of way, a probability of allowing an obstacle to pass, a historical decision making manner, and the like. Therefore, during calculation of the policy cost of each game policy, a cost of each factor may be calculated, and then weighting calculation is performed on the cost of each factor, to obtain the cost of each game policy.

Optionally, in this application, which of the ego vehicle and each obstacle arrives at a conflict point earlier is determined based on a distance between the ego vehicle and the conflict point, a distance between the game object and the conflict point, and a set of game policies between the ego vehicle and each obstacle in the game object. When decision making policies of the ego vehicle and the obstacle in a game policy determine that the ego vehicle arrives at the conflict point earlier than the obstacle, it indicates that a behavior of the ego vehicle is overtaking. In this case, the game policy is tagged with a label "overtaking by the ego vehicle". When decision making policies of the ego vehicle and the obstacle in a game policy determine that the ego vehicle arrives at the conflict point later than the obstacle, it indicates that a behavior of the ego vehicle is yielding. In this case, the game policy is tagged with a label "yielding by the ego vehicle". When decision making policies of the ego vehicle and the obstacle in a game policy determine that both the ego vehicle and the obstacle stop before arriving at the conflict point, it indicates that behaviors of the ego vehicle and the obstacle are yielding. In this case, the game policy is tagged with a label "yielding by both the ego vehicle and the obstacle".

Step S1509: Determine a decision making result of the ego vehicle, where the decision making result is a game policy with a smallest policy cost in same game policies in all sampling game spaces.

Specifically, the cost of each factor is weighted according to a specific rule to obtain the cost of each game policy, then properness evaluation and screening are performed on all factors weighted on the cost of each game policy, and a cost of a game policy that includes an improper factor is deleted, so that a cost of a proper game policy is obtained through screening, and the proper game policy is used as a feasible region between the ego vehicle and the game object. After the feasible region between the ego vehicle and each game object is obtained, an intersection of all obtained feasible regions is calculated, to obtain a common feasible region that satisfies a case in which the ego vehicle encounters a plurality of game objects in a current scenario. Then, the game policy with the smallest game cost is selected from the common feasible region as the decision making result.

Optionally, to handle a problem of a decision making result conflict between the non-game object and the game object, a feasible region of the ego vehicle for a constraint area constituted by the non-game object should be estimated for the constraint area. For example, for a longitudinal (along a road direction in which the ego vehicle travels) action game (for example, overtaking/yielding), a virtual wall is constructed through virtualization in front of the ego vehicle as an upper acceleration limit constraint; and for a transverse (perpendicular to the road direction in which the ego vehicle travels) action game, the ego vehicle uses, as a constraint, a maximum transverse deflection range constituted by the non-game object. In this way, a feasible region between the ego vehicle and the non-game object is constructed. Then, an intersection of the common feasible region between the ego vehicle and all game objects and the feasible region between the ego vehicle and the non-game object is calculated, and a game policy with a smallest game cost is selected from the intersection as the decision making result. If there is no game policy in the intersection, a decision making result of "yielding by the ego vehicle" is selected according to a "safety" principle.

In this embodiment of this application, the predicted moving tracks of the ego vehicle and each obstacle around the ego vehicle are obtained, and the game object is determined by determining whether the predicted moving tracks intersect each other or whether a distance between two vehicles is less than the specified threshold; then, a sampling game space between the ego vehicle and each obstacle is constructed, and a policy cost of each game policy in each sampling game space is calculated; and the same game policies in all the sampling game spaces are obtained, and the game policy with the smallest policy cost in the same game policies is selected as the game result. This solution does not depend on a scenario, and therefore is applicable to all scenarios. In addition, in a game process, when faced with a plurality of game objects, by obtaining the same game policies in all the sampling game spaces, the ego vehicle can game with the plurality of game objects at the same time.

FIG. 16 is a schematic diagram of an architecture of a decision making apparatus according to an embodiment of this application. The apparatus 1600 shown in FIG. 16 includes a transceiver unit 1601 and a processing unit 1602. The units specifically perform the following functions:

The transceiver unit 1601 is configured to obtain predicted moving tracks of an ego vehicle and each obstacle around the ego vehicle. The processing unit 1702 is configured to: determine a game object, where the game object is an obstacle that is in the obstacles around the ego vehicle and whose predicted moving track intersects a predicted moving track of the ego vehicle or whose distance from the ego vehicle is less than a specified threshold; construct one sampling game space for each game object based on vehicle information of the ego vehicle, obstacle information of the game object, and road condition information that are collected by a sensor system, where each sampling game space is a set of different game policies used between the ego vehicle and one obstacle in the game object; calculate a policy cost of each game policy, where the policy cost is a numerical value obtained by performing weighting on each factor weight that affects the policy cost; and determine a decision making result of the ego vehicle, where the decision making result is a game policy with a smallest policy cost in a common sampling game space, the common sampling game space includes at least one game policy, and each sampling game space includes the game policy in the common sampling game space.

In an implementation, the processing unit 1602 is specifically configured to: construct a feasible region of each sampling game space, where the feasible region of each sampling game space is at least one game policy corresponding to a policy cost that meets a specified requirement; and determine a game policy with a smallest policy cost in same game policies from an intersection of feasible regions of all sampling game spaces.

In an implementation, the processing unit 1602 is further configured to: determine a non-game object, where the non-game object is an obstacle that is in the obstacles around the ego vehicle and whose predicted moving track does not intersect the predicted moving track of the ego vehicle or whose distance from the ego vehicle is not less than the specified threshold; construct a feasible region of the ego vehicle based on the vehicle information of the ego vehicle, obstacle information of the non-game object, and the road condition information that are collected by the sensor system, where the feasible region of the ego vehicle is at least one policy of using different decisions by the ego vehicle without colliding with the non-game object; and if it is detected that the decision making result of the ego vehicle is within the feasible region of the ego vehicle, output the decision making result of the ego vehicle.

In an implementation, the processing unit 1602 is specifically configured to: determine upper decision limits and lower decision limits of the ego vehicle and each obstacle in the game object based on the vehicle information of the ego vehicle, the obstacle information of the game object, and the road condition information; obtain decision making policies of the ego vehicle and each obstacle in the game object from the upper decision limits and lower decision limits of the ego vehicle and each obstacle in the game object according to a specified rule; and combine a decision making policy of the ego vehicle and a decision making policy of each obstacle in the game object, to obtain at least one game policy between the ego vehicle and each obstacle in the game object.

In an implementation, the processing unit 1602 is further configured to determine a behavior label of each game policy based on a distance between the ego vehicle and a conflict point, a distance between the game object and the conflict point, and the at least one game policy between the ego vehicle and each obstacle in the game object, where the conflict point is a location at which predicted moving tracks of the ego vehicle and the obstacle intersect each other or a location at which a distance between the ego vehicle and the obstacle is less than the specified threshold, and the behavior label includes at least one of yielding by the ego vehicle, overtaking by the ego vehicle, and yielding by both the ego vehicle and the obstacle.

In an implementation, the processing unit 1602 is specifically configured to: determine all factors of the policy cost, where all the factors of the policy cost include at least one of safety, comfort, passing efficiency, right of way, a prior probability of an obstacle, and historical decision correlation; calculate a factor cost of each factor in each policy cost; and weight the factor cost of each factor in each policy cost, to obtain the policy cost of each game policy.

In an implementation, the processing unit 1602 is further configured to: perform comparison to determine whether each factor in the policy cost is within a specified range; and delete a game policy corresponding to a policy cost including any factor that is not within the specified range.

In an implementation, the processing unit 1602 is further configured to: if it is detected that the decision making result of the ego vehicle is not within the feasible region of the ego vehicle, output a decision making result of yielding by the ego vehicle.

The present invention provides a computer-readable storage medium. The computer-readable storage medium stores a computer program. When the computer program is executed on a computer, the computer is enabled to perform any one of the foregoing methods.

The present invention provides a computing device, including a memory and a processor. The memory stores executable code, and the processor executes the executable code to implement any one of the foregoing methods.

A person of ordinary skill in the art may be aware that units and algorithm steps described as examples with reference to the embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

In addition, each aspect or feature in embodiments of this application may be implemented as a method, an apparatus, or an artifact that uses standard programming and/or engineering technologies. The term "artifact" used in this application covers a computer program that can be accessed from any computer-readable device, carrier, or medium. For example, the computer-readable medium may include but is not limited to: a magnetic storage device (for example, a hard disk, a floppy disk, or a magnetic tape), an optical disc (for example, a compact disc (compact disc, CD) or a digital versatile disc (digital versatile disc, DVD)), a smart card, and a flash device (for example, an erasable programmable read-only memory (erasable programmable read-only memory, EPROM), a card, a stick, or a key drive). In addition, various storage media described in this specification may represent one or more devices and/or other machine-readable media configured to store information. The term "machine-readable media" may include but is not limited to a radio channel and various other media that can store, include, and/or carry instructions and/or data.

In the foregoing embodiment, the decision making apparatus 1600 in FIG. 16 may be implemented completely or partially by using software, hardware, firmware, or any combination thereof. When software is used for implementation, the embodiment may be implemented completely or partially in a form of a computer program product. The computer program product includes one or more computer instructions. When the computer program instruction is loaded and executed on a computer, the procedures or functions according to embodiments of this application are all or partially generated. The computer may be a general-purpose computer, a dedicated computer, a computer network, or another programmable apparatus. The computer instruction may be stored in a computer-readable storage medium, or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

It should be understood that, in various embodiments of embodiments of this application, sequence numbers of the foregoing processes do not indicate execution sequences. Execution sequences of the processes should be determined based on functions and internal logic of the processes, and shall not constitute any limitation on an implementation process of embodiments of this application.

It can be clearly understood by a person skilled in the art that, for ease and brevity of description, for specific working processes of the foregoing system, apparatus, and unit, reference may be made to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division, and there may be another division manner during actual implementation. For example, a plurality of units or components may be combined or may be integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate components may be or may not be physically separate, and components displayed as units may be or may not be physical units, and may be located in one position, or may be distributed on a plurality of network units. Some or all of the units may be selected based on an actual requirement to achieve the objectives of the solutions in embodiments.

When the function is implemented in a form of a software function unit and is sold or used as an independent product, the function may be stored in a computer-readable storage medium. Based on such an understanding, the technical solutions in embodiments of this application essentially, or the part contributing to a conventional technology, or a part of the technical solutions may be implemented in a form of a software product. The computer software product is stored in a storage medium, and includes several instructions for instructing a computer device (which may be a personal computer, a server, an access network device, or the like) to perform all or some of the steps of the method in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application.

**Claims**

1. A decision making method, comprising:

    obtaining predicted moving tracks of an ego vehicle and each obstacle around the ego vehicle;
    determining a game object, wherein the game object is an obstacle that is in the obstacles around the ego vehicle and whose predicted moving track intersects a predicted moving track of the ego vehicle or whose distance from the ego vehicle is less than a specified threshold;
    constructing one sampling game space for each game object based on vehicle information of the ego vehicle, obstacle information of the game object, and road condition information that are collected by a sensor system, wherein each sampling game space comprises at least one game policy;
    calculating a policy cost of each game policy, wherein the policy cost is a numerical value obtained by performing weighting on each factor weight of the policy cost; and
    determining a decision making result of the ego vehicle, wherein the decision making result is a game policy with a smallest policy cost in a common sampling game space, the common sampling game space comprises at least one game policy, and each sampling game space comprises the game policy in the common sampling game space.

2. The method according to claim 1, wherein the determining a decision making result of the ego vehicle comprises:

    constructing a feasible region of each sampling game space, wherein the feasible region of each sampling game space is at least one game policy corresponding to a policy cost that meets a specified requirement; and
    determining a game policy with a smallest policy cost in same game policies from an intersection of feasible regions of all sampling game spaces.

3. The method according to claim 1 or 2, wherein the method further comprises:

    determining a non-game object, wherein the non-game object is an obstacle that is in the obstacles around the ego vehicle and whose predicted moving track does not intersect the predicted moving track of the ego vehicle or whose distance from the ego vehicle is not less than the specified threshold;
    constructing a feasible region of the ego vehicle based on the vehicle information of the ego vehicle, obstacle information of the non-game object, and the road condition information that are collected by the sensor system, wherein the feasible region of the ego vehicle is at least one policy of using different decisions by the ego vehicle without colliding with the non-game object; and
    if it is detected that the decision making result of the ego vehicle is within the feasible region of the ego vehicle, outputting the decision making result of the ego vehicle.

4. The method according to any one of claims 1 to 3, wherein the constructing one sampling game space for each game object based on vehicle information of the ego vehicle, obstacle information of the game object, and road condition information that are collected by a sensor system comprises:

    determining upper decision limits and lower decision limits of the ego vehicle and each obstacle in the game object based on the vehicle information of the ego vehicle, the obstacle information of the game object, and the road condition information;
    obtaining decision making policies of the ego vehicle and each obstacle in the game object from the upper decision limits and lower decision limits of the ego vehicle and each obstacle in the game object according to a specified rule; and
    combining a decision making policy of the ego vehicle and a decision making policy of each obstacle in the game object, to obtain at least one game policy between the ego vehicle and each obstacle in the game object.

5. The method according to any one of claims 1 to 4, wherein the method further comprises:
determining a behavior label of each game policy based on a distance between the ego vehicle and a conflict point, a distance between the game object and the conflict point, and the at least one game policy between the ego vehicle and each obstacle in the game object, wherein the conflict point is a location at which predicted moving tracks of the ego vehicle and the obstacle intersect each other or a location at which a distance between the ego vehicle and the obstacle is less than the specified threshold, and the behavior label comprises at least one of yielding by the ego vehicle, overtaking by the ego vehicle, and yielding by both the ego vehicle and the obstacle.

6. The method according to any one of claims 1 to 5, wherein the calculating a policy cost of each game policy comprises:

determining all factors of the policy cost, wherein all the factors of the policy cost comprise at least one of safety, comfort, passing efficiency, right of way, a prior probability of an obstacle, and historical decision correlation;
calculating a factor cost of each factor in each policy cost; and
weighting the factor cost of each factor in each policy cost, to obtain the policy cost of each game policy.

7. The method according to any one of claims 1 to 6, wherein after the calculating a policy cost of each game policy, the method further comprises:

performing comparison to determine whether each factor in the policy cost is within a specified range; and
deleting a game policy corresponding to a policy cost comprising any factor that is not within the specified range.

8. The method according to any one of claims 1 to 7, wherein the method further comprises:
if it is detected that the decision making result of the ego vehicle is not within the feasible region of the ego vehicle, outputting a decision making result of yielding by the ego vehicle.

9. A decision making apparatus, comprising:

a transceiver unit, configured to obtain predicted moving tracks of an ego vehicle and each obstacle around the ego vehicle; and
a processing unit, configured to: determine a game object, wherein the game object is an obstacle that is in the obstacles around the ego vehicle and whose predicted moving track intersects a predicted moving track of the ego vehicle or whose distance from the ego vehicle is less than a specified threshold;
construct one sampling game space for each game object based on vehicle information of the ego vehicle, obstacle information of the game object, and road condition information that are collected by a sensor system, wherein each sampling game space comprises at least one game policy;
calculate a policy cost of each game policy, wherein the policy cost is a numerical value obtained by performing weighting on each factor weight of the policy cost; and
determine a decision making result of the ego vehicle, wherein the decision making result is a game policy with a smallest policy cost in a common sampling game space, the common sampling game space comprises at least one game policy, and each sampling game space comprises the game policy in the common sampling game space.

10. The apparatus according to claim 9, wherein the processing unit is specifically configured to:

construct a feasible region of each sampling game space, wherein the feasible region of each sampling game space is at least one game policy corresponding to a policy cost that meets a specified requirement; and
determine a game policy with a smallest policy cost in same game policies from an intersection of feasible regions of all sampling game spaces.

11. The apparatus according to claim 9 or 10, wherein the processing unit is further configured to:

determine a non-game object, wherein the non-game object is an obstacle that is in the obstacles around the ego vehicle and whose predicted moving track does not intersect the predicted moving track of the ego vehicle or whose distance from the ego vehicle is not less than the specified threshold;
construct a feasible region of the ego vehicle based on the vehicle information of the ego vehicle, obstacle information of the non-game object, and the road condition information that are collected by the sensor system, wherein the feasible region of the ego vehicle is at least one policy of using different decisions by the ego vehicle without colliding with the non-game object; and

if it is detected that the decision making result of the ego vehicle is within the feasible region of the ego vehicle, output the decision making result of the ego vehicle.

12. The apparatus according to any one of claims 9 to 11, wherein the processing unit is specifically configured to:

determine upper decision limits and lower decision limits of the ego vehicle and each obstacle in the game object based on the vehicle information of the ego vehicle, the obstacle information of the game object, and the road condition information;

obtain decision making policies of the ego vehicle and each obstacle in the game object from the upper decision limits and lower decision limits of the ego vehicle and each obstacle in the game object according to a specified rule; and

combine a decision making policy of the ego vehicle and a decision making policy of each obstacle in the game object, to obtain the at least one game policy between the ego vehicle and each obstacle in the game object.

13. The apparatus according to any one of claims 9 to 12, wherein the processing unit is further configured to: determine a behavior label of each game policy based on a distance between the ego vehicle and a conflict point, a distance between the game object and the conflict point, and the at least one game policy between the ego vehicle and each obstacle in the game object, wherein the conflict point is a location at which predicted moving tracks of the ego vehicle and the obstacle intersect each other or a location at which a distance between the ego vehicle and the obstacle is less than the specified threshold, and the behavior label comprises at least one of yielding by the ego vehicle, overtaking by the ego vehicle, and yielding by both the ego vehicle and the obstacle.

14. The apparatus according to any one of claims 9 to 13, wherein the processing unit is specifically configured to:

determine all factors of the policy cost, wherein all the factors of the policy cost comprise at least one of safety, comfort, passing efficiency, right of way, a prior probability of an obstacle, and historical decision correlation; calculate a factor cost of each factor in each policy cost; and

weight the factor cost of each factor in each policy cost, to obtain the policy cost of each game policy.

15. The apparatus according to any one of claims 9 to 14, wherein the processing unit is further configured to:

perform comparison to determine whether each factor in the policy cost is within a specified range; and

delete a game policy corresponding to a policy cost comprising any factor that is not within the specified range.

16. The apparatus according to any one of claims 9 to 15, wherein the processing unit is further configured to:

if it is detected that the decision making result of the ego vehicle is not within the feasible region of the ego vehicle, output a decision making result of yielding by the ego vehicle.

17. A vehicle, comprising at least one processor, wherein the processor is configured to execute instructions stored in a memory, to perform the method according to any one of claims 1 to 8.

18. An intelligent driving system, comprising a sensor system and a processor, wherein the processor is configured to perform the method according to any one of claims 1 to 8.

19. A computer-readable storage medium, wherein the computer-readable storage medium stores a computer program, and when the computer program is executed on a computer, the computer is enabled to perform the method according to any one of claims 1 to 8.

20. A computing device, comprising a memory and a processor, wherein the memory stores executable code, and the processor executes the executable code to implement the method according to any one of claims 1 to 8.

21. A computer program product, wherein the computer program product stores instructions, and when the instructions are executed by a computer, the computer is enabled to implement the method according to any one of claims 1 to 8.

Intelligent driving system 100

```
┌─────────────────────────────────────────────────────────────────────────┐
│                                                                           │
│   ┌──────────┐      ┌──────────┐      ┌──────────┐      ┌──────────┐      │
│ ─▶│Prediction│ ────▶│ Decision │ ────▶│ Planning │ ────▶│ Control  │ ────▶│
│   │module 10 │      │  making  │      │module 40 │      │module 50 │      │
│   └──────────┘      │module 30 │      └──────────┘      └──────────┘      │
│                     └──────────┘                                          │
│                          ▲                                                │
│                          │                                                │
│                     ┌──────────┐                                          │
│                     │Navigation│                                          │
│                     │module 20 │                                          │
│                     └──────────┘                                          │
│                                                                           │
└─────────────────────────────────────────────────────────────────────────┘
```

FIG. 1

```
┌───────────────────────────────────────────────────────────────────────────┐
│                        Decision making module 30                           │
│                                                                            │
│  Vehicle                              ┌──────────────┐                     │
│information                Game object │Game decision │                     │
│ of an ego              ┌─────────────▶│ making unit  │──────┐              │
│  vehicle               │              │     302      │      │              │
│  Obstacle              │              └──────────────┘      ▼              │
│information   ┌──────────────┐                      ┌──────────────┐        │
│Right-of-way  │ Game object  │                      │   Conflict   │        │
│information ─▶│screening unit│                      │processing unit│ ────▶ │
│              │     301      │                      │     304      │        │
│              └──────────────┘                      └──────────────┘        │
│                        │              ┌──────────────┐      ▲              │
│                        │  Non-game    │  Rule-based  │      │              │
│                        └─────────────▶│   decision   │──────┘              │
│                           object      │ making unit  │                     │
│                                       │     303      │                     │
│                                       └──────────────┘                     │
│                                                                            │
└───────────────────────────────────────────────────────────────────────────┘
```

FIG. 2

Obstacle

Game object

Ego vehicle

Scenario 1

Game object

Ego vehicle

Scenario 2

Non-game object

Game object 2

Game object 1

Game object

Scenario 3

Scenario 4

FIG. 3

FIG. 4

FIG. 5

FIG. 6

Minimum distance between two vehicles

10.0

2.0

0.5

0.01

Space-domain safety cost

1e4

1.0

0.19
0.11
0.10

FIG. 7

Comfort cost

1.0

0

7 Acceleration
variation

FIG. 8

Efficiency cost

10

−6

6 T/[s]

Time for passing through
a collision point

FIG. 9

FIG. 10

FIG. 11

FIG. 12

FIG. 13

| | Acceleration sampling space of an ego vehicle | Acceleration sampling space of a social vehicle | Cost | Decision Tag |
|---|---|---|---|---|
| **Social vehicle A** | 2.0 m/s*2<br>1.0 m/s*2<br>0.0 m/s*2<br>−1.0 m/s*2<br>−2.0 m/s*2<br>−3.0 m/s*2<br>−4.0 m/s*2 | 3.0 m/s*2<br>2.45 m/s*2<br>1.45 m/s*2<br>0.45 m/s*2<br>−0.55 m/s*2<br>−1.55 m/s*2<br>−2.55 m/s*2<br>−3.55 m/s*2 | 11234.18<br>11212.81<br>11174.06<br>11135.31<br>10413.67<br>10432.26<br>10462.08<br>... | YD<br>YD<br>YD<br>YD<br>GW<br>GW<br>GW<br>... |
| **Social vehicle B** | 2.0 m/s*2<br>1.0 m/s*2<br>−1.0 m/s*2<br>−2.0 m/s*2<br>−3.0 m/s*2<br>−4.0 m/s*2 | 3.0 m/s*2<br>2.45 m/s*2<br>1.45 m/s*2<br>0.45 m/s*2<br>−0.55 m/s*2<br>−1.55 m/s*2<br>−2.55 m/s*2<br>−3.55 m/s*2 | 11165.76<br>11105.99<br>11144.56<br>11067.41<br>11178.61<br>11093.13<br>14414.21<br>14452.78<br>... | YD<br>YD<br>YD<br>YD<br>YD<br>YD<br>GW<br>GW<br>... |
| Social vehicle C | 0.8 m/s*2<br>0.0 m/s*2<br>−1.0 m/s*2<br>−2.0 m/s*2<br>−3.0 m/s*2<br>−4.0 m/s*2 | | | |

FIG. 14

| | |
|---|---|
| Obtain predicted moving tracks of an ego vehicle and each obstacle around the ego vehicle | S1501 |
| Determine a game object | S1503 |
| Construct one sampling game space for each game object based on vehicle information of the ego vehicle, obstacle information of the game object, and road condition information that are collected by a sensor system | S1505 |
| Calculate a policy cost of each game policy | S1507 |
| Determine a decision making result of the ego vehicle | S1509 |

FIG. 15

1600

Transceiver
unit 1601

Processing
unit 1602

FIG. 16

## INTERNATIONAL SEARCH REPORT

| | International application No. |
|---|---|
| | **PCT/CN2022/077480** |

| **A.** | **CLASSIFICATION OF SUBJECT MATTER** |
|---|---|

B60W 60/00(2020.01)i

According to International Patent Classification (IPC) or to both national classification and IPC

| **B.** | **FIELDS SEARCHED** |
|---|---|

Minimum documentation searched (classification system followed by classification symbols)

B60W

Documentation searched other than minimum documentation to the extent that such documents are included in the fields searched

Electronic data base consulted during the international search (name of data base and, where practicable, search terms used)

CNABS, CNKI, VEN: 自动, 自主, 智能, 驾驶, 博弈, 策略, 代价, autonomous, drive, intelligent, game, strategy, cost

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| A | CN 112373485 A (NANJING UNIVERSITY OF AERONAUTICS AND ASTRONAUTICS) 19 February 2021 (2021-02-19)<br>    description, paragraphs 0060-0113, and figures 1-2 | 1-21 |
| A | CN 112896186 A (TONGJI UNIVERSITY) 04 June 2021 (2021-06-04)<br>    entire document | 1-21 |
| A | CN 111775961 A (BEIJING BAIDU NETCOM SCIENCE AND TECHNOLOGY CO., LTD.) 16 October 2020 (2020-10-16)<br>    entire document | 1-21 |
| A | CN 112373470 A (LIAOCHENG UNIVERSITY) 19 February 2021 (2021-02-19)<br>    entire document | 1-21 |
| A | CN 111038497 A (SUZHOU ZHIJIA TECHNOLOGY CO., LTD.) 21 April 2020 (2020-04-21)<br>    entire document | 1-21 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 April 2022** | **18 May 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/077480**

| Patent document cited in search report | | | Publication date (day/month/year) | Patent family member(s) | Publication date (day/month/year) |
|---|---|---|---|---|---|
| CN | 112373485 | A | 19 February 2021 | None | |
| CN | 112896186 | A | 04 June 2021 | None | |
| CN | 111775961 | A | 16 October 2020 | None | |
| CN | 112373470 | A | 19 February 2021 | None | |
| CN | 111038497 | A | 21 April 2020 | None | |

Form PCT/ISA/210 (patent family annex) (January 2015)

**EP 4 321 406 A1**

**Patent documents cited in the description**

- CN 202110454337X